# EUROPEAN PATENT APPLICATION

(11) **EP 4 369 788 A1**
(43) Date of publication of application: **15.05.2024**
(21) Application number: 22857316.8
(22) Date of filing: 22.04.2022
(51) Int. Cl.: H04W 36/00

(54) **COMMUNICATION TUNNEL MANAGEMENT METHOD, APPARATUS AND SYSTEM**

(30) Priority: 15.08.2021 CN 202110933695
(71) Applicant: Huawei Technologies Co., Ltd., Shenzhen, Guangdong 518129 (CN)
(72) Inventor: JIA, Jianxin, Shenzhen, Guangdong 518129 (CN); WU, Wenfu, Shenzhen, Guangdong 518129 (CN); ZONG, Zaifeng, Shenzhen, Guangdong 518129 (CN)
(74) Representative: Gill Jennings & Every LLP
(86) International application number: PCT/CN2022/088547
(87) International publication number: WO 2023/019998

(57) **Abstract**

This application discloses a communication tunnel management method, apparatus, and system, to resolve a problem that overheads of supporting a multicast/broadcast function based on a communication network architecture are high. The method includes: A UPF receives a tenth message sent by an SMF, where the tenth message requests allocation of information about a first tunnel, and the first tunnel is used for transmitting data of a multicast/broadcast service between a multicast/broadcast UPF and the UPF; and sends an eleventh message to the SMF if determining that the SMF is the 1^{st} SMF that sends the tenth message in a plurality of SMFs, where the eleventh message includes the information about the first tunnel; otherwise, sends a twelfth message to the SMF, where the twelfth message includes an indication indicating that the information about the first tunnel has been allocated. In the method, SMFs in a same SMF set establish only one N19mb tunnel for a multicast/broadcast service for a UPF, so that communication tunnel sharing is implemented, network resources are effectively saved, and system overheads are reduced.

## Description

### CROSS-REFERENCE TO RELATED APPLICATIONS

This application claims priority to Chinese Patent Application No. 202110933695.9, filed with the China National Intellectual Property Administration on August 15, 2021 and entitled "COMMUNICATION TUNNEL MANAGEMENT METHOD, APPARATUS, AND SYSTEM", which is incorporated herein by reference in its entirety.

### TECHNICAL FIELD

This application relates to the field of communication technologies, and in particular, to a communication tunnel management method, apparatus, and system.

### BACKGROUND

With development of the mobile Internet, mobile high-definition video services are experiencing a surge. Users gradually change from conventionally watching hot programs on fixed televisions to watching hot programs on mobile phone terminals and the mobile Internet. Therefore, video services have increasingly strong impact on mobile networks. If transmission of video services can be optimized through air interface multicast, the impact of video traffic on the mobile networks will be greatly reduced.

Specifically, in an existing multicast/broadcast solution, a dedicated network element and a dedicated interface that support multicast/broadcast need to be added based on an existing communication architecture, and a dedicated multicast/broadcast channel is further required for support. This increases overheads of an operator, and further increases complexity of a terminal. Therefore, how to support a multicast/broadcast function (Multicast/Broadcast Service, MBS) based on a mobile communication network architecture and effectively reduce system overheads is a technical problem to be urgently resolved.

### SUMMARY

This application provides a communication tunnel management method, apparatus, and system, to resolve a problem that power consumption overheads are high when a multicast/broadcast service is performed in a current mobile communication network architecture.

According to a first aspect, this application provides a communication tunnel management method. The method includes:

A multicast/broadcast session management function network element receives a first message sent by a first session management function network element, where the first message requests to receive data of a multicast/broadcast service, and the first message carries identification information of the multicast/broadcast service; and the multicast/broadcast session management function network element determines, based on the first message, that a first tunnel exists, and sends a second message to the first session management function network element, where the second message indicates that the first tunnel exists, and the first tunnel is used for transmitting the data of the multicast/broadcast service between a multicast/broadcast user plane function network element controlled by the multicast/broadcast session management function network element and a user plane function network element controlled by the first session management function network element.

In a possible design, the second message may be a multicast/broadcast service data reception response (Nmbsmf_Reception_Response), the second message may be a multicast/broadcast session establishment response (Nsmf_MBSSession_Create Response), or the second message may be a multicast/broadcast session update response (Nsmf_MBSSession_Update Response).

Based on the foregoing solution, in this embodiment of this application, after receiving the first message, the multicast/broadcast session management function network element first determines whether the first tunnel used for transmitting the data of the multicast/broadcast service already exists. If the first tunnel exists, a tunnel used for transmitting the data of the multicast/broadcast service does not need to be re-established, and the previously established tunnel is directly used for transmission, so that a plurality of SMFs can share one tunnel, to effectively save network resources.

In a possible design, the first message further includes information about the first tunnel.

In a possible design, the information about the first tunnel may be information about an N19mb tunnel (N19mb Tunnel Information), and the information about the N19mb tunnel may include an IP address, a port number, and/or a TEID.

In a possible design, before the multicast/broadcast session management function network element sends the second message to the first session management function network element, if the multicast/broadcast session management function network element determines, based on the first message, that the first tunnel does not exist, the multicast/broadcast session management function network element creates first information.

In a possible design, the first information includes a part or all of the identification information of the multicast/broadcast service, the information about the first tunnel, an identifier of the first session management function network element, an identifier of a session management function network element corresponding to the multicast/broadcast service and the first tunnel, a multicast/broadcast service context corresponding to the multicast/broadcast service, and a quantity of session management function network elements corresponding to the multicast/broadcast service and the first tunnel.

In a possible design, the method further includes: The multicast/broadcast session management function network element receives a ninth message sent by a second session management function network element, where the ninth message carries the identification information of the multicast/broadcast service; the multicast/broadcast session management function network element determines, based on the ninth message, that the first tunnel exists; and the multicast/broadcast session management function network element updates the first information.

Based on the foregoing solution, it can be effectively ensured that SMFs in an SMF network element set establish only one N19mb tunnel for a multicast/broadcast service for a UPF, to effectively save network resources. In addition, after determining, based on the ninth message, that the first tunnel exists, the multicast/broadcast session management function network element further updates the first information based on the ninth message, to better perform communication tunnel management.

It may be understood that the ninth message may be the same as the first message.

In a possible design, when the first information includes the identification information of the multicast/broadcast service, the information about the first tunnel, the identifier of the first session management function network element, and the quantity of session management function network elements corresponding to the multicast/broadcast service and the first tunnel, an identifier of the second session management function network element is added to the first information, and the quantity of session management function network elements corresponding to the multicast/broadcast service and the first tunnel is updated.

In a possible design, when the first information includes the identification information of the multicast/broadcast service, the information about the first tunnel, and the identifier of the first session management function network element, an identifier of the second session management function network element is added to the first information.

In a possible design, when the first information includes the identification information of the multicast/broadcast service, the information about the first tunnel, and the quantity of session management function network elements corresponding to the multicast/broadcast service and the first tunnel, the quantity of session management function network elements corresponding to the multicast/broadcast service and the first tunnel is updated.

In a possible design, when the first information includes the identification information of the multicast/broadcast service, the information about the first tunnel, the identifier of the session management function network element corresponding to the multicast/broadcast service and the first tunnel, and the quantity of session management function network elements corresponding to the multicast/broadcast service and the first tunnel, an identifier of the second session management function network element is added to the first information, and the quantity of session management function network elements corresponding to the multicast/broadcast service and the first tunnel is updated.

In a possible design, when the first information includes the identification information of the multicast/broadcast service, the information about the first tunnel, and the multicast/broadcast service context corresponding to the multicast/broadcast service, an identifier of the second session management function network element is added to the multicast/broadcast service context corresponding to the multicast/broadcast service.

In a possible design, the method further includes: The multicast/broadcast session management function network element sends a third message to the second session management function network element, where the third message indicates existence of the first tunnel.

It may be understood that the third message may be the same as the second message.

In a possible design, the third message includes one or more of the identification information of the multicast/broadcast service, the information about the first tunnel, and an indication indicating that the first tunnel exists.

In a possible design, the second message includes the information about the first tunnel.

In a possible design, the method further includes: The multicast/broadcast session management function network element receives a fourth message from the first session management function network element and/or the second session management function network element, where the fourth message requests to unsubscribe from an event related to the multicast/broadcast service; the fourth message requests to release the first tunnel; or the fourth message indicates the first session management function network element and/or the second session management function network element to exit receiving the data of the multicast/broadcast service.

In a possible design, the fourth message may be a multicast/broadcast service data reception release request (Nmbsmf_Reception_Release Request), a multicast/broadcast service session release request (Nmbsmf_MBSSession_Release Request), a multicast/broadcast service session update request (Nmbsmf_MBSSession_Update Request), or a multicast/broadcast information unsubscription request (Nmbsmf_Information_Unsubscribe Request).

In a possible design, the fourth message includes one or both of the following information: the identification information of the multicast/broadcast service, and a subscription correlation identifier (Subscription correlation ID).

In a possible design, the method further includes: The multicast/broadcast session management function network element updates the first information based on the fourth message.

In a possible design, an operation of updating the first information by the multicast/broadcast session management function network element based on the fourth message may be understood as a subtraction operation.

Based on the foregoing solution, this application provides a solution of releasing a communication tunnel, to better perform communication tunnel management based on different cases.

In a possible design, when the first information includes the identification information of the multicast/broadcast service, the information about the first tunnel, the identifier of the first session management function network element, and the quantity of session management function network elements corresponding to the multicast/broadcast service and the first tunnel, the identifier of the first session management function network element and/or the identifier of the second session management function network element are/is deleted from the first information, and the quantity of session management function network elements corresponding to the multicast/broadcast service and the first tunnel is updated.

In a possible design, when the first information includes the identification information of the multicast/broadcast service, the information about the first tunnel, and the identifier of the first session management function network element, the identifier of the first session management function network element and/or the identifier of the second session management function network element are/is deleted from the first information.

In a possible design, when the first information includes the identification information of the multicast/broadcast service, the information about the first tunnel, and the quantity of session management function network elements corresponding to the multicast/broadcast service and the first tunnel, the quantity of session management function network elements corresponding to the multicast/broadcast service and the first tunnel is updated.

In a possible design, when the first information includes the identification information of the multicast/broadcast service, the information about the first tunnel, the identifier of the session management function network element corresponding to the multicast/broadcast service and the first tunnel, and the quantity of session management function network elements corresponding to the multicast/broadcast service and the first tunnel, the identifier of the first session management function network element and/or the identifier of the second session management function network element are/is deleted from the first information, and the quantity of session management function network elements corresponding to the multicast/broadcast service and the first tunnel is updated.

In a possible design, when the first information includes the identification information of the multicast/broadcast service, the information about the first tunnel, and the multicast/broadcast service context corresponding to the multicast/broadcast service, the identifier of the first session management function network element and/or the identifier of the second session management function network element are/is deleted from the multicast/broadcast service context corresponding to the multicast/broadcast service.

In a possible design, after the multicast/broadcast session management function network element updates the first information based on the fourth message, the multicast/broadcast session management function network element determines that a first condition is satisfied, and sends a fifth message to the multicast/broadcast user plane function network element, where the fifth message indicates to release the first tunnel.

In a possible design, the first condition includes: When the first information includes the identification information of the multicast/broadcast service, the information about the first tunnel, the identifier of the first session management function network element, and the quantity of session management function network elements corresponding to the multicast/broadcast service and the first tunnel, the multicast/broadcast session management function network element determines that the first information does not include an identifier of any session management function network element and the quantity of session management function network elements corresponding to the multicast/broadcast service and the first tunnel is 0;
when the first information includes the identification information of the multicast/broadcast service, the information about the first tunnel, and the identifier of the first session management function network element, the multicast/broadcast session management function network element determines that the first information does not include an identifier of any session management function network element;
when the first information includes the identification information of the multicast/broadcast service, the information about the first tunnel, and the quantity of session management function network elements corresponding to the multicast/broadcast service and the first tunnel, the multicast/broadcast session management function network element determines that the quantity of session management function network elements corresponding to the multicast/broadcast service and the first tunnel is 0; or
when the first information includes the identification information of the multicast/broadcast service, the information about the first tunnel, the identifier of the session management function network element corresponding to the multicast/broadcast service and the first tunnel, and the quantity of session management function network elements corresponding to the multicast/broadcast service and the first tunnel, the multicast/broadcast session management function network element determines that the first information does not include an identifier of any session management function network element, and the quantity of session management function network elements corresponding to the multicast/broadcast service and the first tunnel is 0.

In a possible design, the method further includes: The multicast/broadcast session management function network element receives a sixth message from the multicast/broadcast user plane function network element, where the sixth message is used for feeding back a result of releasing the first tunnel by the multicast/broadcast user plane function network element.

Based on the foregoing solution, a proper occasion can be accurately selected for releasing the N19mb tunnel shared by the session management function network element node for the multicast/broadcast service, to avoid multicast/broadcast service data transmission interruption of another session management function network element node in the session management function network element set due to an improper release occasion.

In a possible design, the first message may be a multicast/broadcast service data reception request (Nmbsmf_Reception_Request), the first message may be a multicast/broadcast session establishment request (Nsmf_MBSSession_Create Request), or the first message may be a multicast/broadcast session update request (Nsmf_MBSSession_Update Request).

In a possible design, the information about the first tunnel may include one or more of the following:
an IP address, an FQDN, and a port number of the user plane function network element, and a tunnel endpoint identifier (Tunnel Endpoint ID, TEID) of the first tunnel.

According to a second aspect, this application provides a communication tunnel management method. The method includes:
A session management function network element sends a ninth message to a multicast/broadcast session management function network element, where the ninth message requests to receive data of a multicast/broadcast service, and the ninth message carries identification information of the multicast/broadcast service; and the session management function network element receives a third message sent by the multicast/broadcast session management function network element, where the third message indicates that a first tunnel exists, and the first tunnel is used for transmitting the data of the multicast/broadcast service between a multicast/broadcast user plane function network element controlled by the multicast/broadcast session management function network element and a user plane function network element controlled by the session management function network element.

Based on the foregoing solution, in this embodiment of this application, after receiving the ninth message, the multicast/broadcast session management function network element first determines whether the first tunnel used for transmitting the data of the multicast/broadcast service already exists. If the first tunnel exists, a tunnel used for transmitting the data of the multicast/broadcast service does not need to be re-established, and the previously established tunnel is directly used for transmission, so that a plurality of SMFs can share one tunnel, to effectively save network resources.

In a possible design, the third message includes one or more of the identification information of the multicast/broadcast service, information about the first tunnel, and an indication indicating that the first tunnel exists.

In a possible design, the method further includes: The session management function network element sends a seventh message to the user plane function network element, where the seventh message includes an identifier of a session management function network element set to which the session management function network element belongs, and the seventh message notifies the user plane function network element of the information about the first tunnel.

In a possible design, the first message further includes the information about the first tunnel.

In a possible design, before the session management function network element sends the first message to the multicast/broadcast session management function network element, the session management function network element determines that an eighth message sent by the user plane function network element is not received, where the eighth message includes the information about the first tunnel.

Based on the foregoing solution, it can be effectively ensured that SMFs in an SMF network element set establish only one N19mb tunnel for a multicast/broadcast service for a UPF, to effectively save network resources. In addition, after the 1^{st} SMF network element in the SMF network element set establishes the first tunnel, the 1^{st} SMF network element sends, to the UPF, the identifier of the SMF network element set to which the 1^{st} SMF network element belongs, so that the UPF can send the information about the first tunnel to another SMF in the SMF network element set. Therefore, when the another SMF in the SMF network element set subsequently performs a process such as establishing a communication tunnel, a quantity of signaling interaction times, and/or a size of signaling content can be effectively reduced. For example, when the another SMF in the SMF network element set sends, to the UPF, a message requesting to receive the data of the multicast/broadcast service, the message may not need to carry the information about the first tunnel. This effectively reduces previous steps of establishing the communication tunnel by the another SMF in the SMF network element set, and the like, effectively reduces a content size of the message, and saves resources.

In a possible design, the method further includes: The session management function network element sends a fourth message to the multicast/broadcast session management function network element, where the fourth message requests to unsubscribe from an event related to the multicast/broadcast service, the fourth message requests to release the first tunnel, or the fourth message indicates the session management function network element to exit receiving the data of the multicast/broadcast service.

In a possible design, the fourth message includes the identification information of the multicast/broadcast service and/or a subscription correlation identifier.

In a possible design, before the session management function network element sends the ninth message to the multicast/broadcast session management function network element, the session management function network element sends a tenth message to the user plane function network element, where the tenth message requests the user plane function network element to allocate the information about the first tunnel.

Based on the foregoing solution, SMFs in an SMF network element set can establish only one N19mb tunnel for a multicast/broadcast service for a UPF. Therefore, when the session management function network element establishes a communication tunnel, the SMF may first send the tenth message to the UPF. If a communication tunnel is established in the SMF network element set to which the SMF belongs, the ninth message and the like may not need to be executed. This effectively reduces previous steps of establishing the communication tunnel by the another SMF in the SMF network element set, and the like, effectively reduces a size of content of the message, and saves resources.

According to a third aspect, this application provides a communication tunnel management method. The method includes:
A session management function network element sends a first message to a multicast/broadcast session management function network element, where the first message requests to receive data of a multicast/broadcast service, and the first message carries identification information of the multicast/broadcast service; and the session management function network element receives a second message sent by the multicast/broadcast session management function network element, where the second message is a feedback message for the first message.

In a possible design, before the session management function network element sends the first message to the multicast/broadcast session management function network element, the session management function network element sends a tenth message to a user plane function network element, where the tenth message requests the user plane function network element to allocate information about a first tunnel.

Based on the foregoing solution, when a tunnel used for transmission between a multicast/broadcast user plane function network element controlled by the multicast/broadcast session management function network element and the user plane function network element controlled by the session management function network element is established, SMFs in a same SMF network element set are enabled to share one communication tunnel, to be specific, the SMFs in the SMF set establish only one N19mb tunnel for a multicast/broadcast service for the UPF, so that network resources can be effectively saved, and system overheads can be reduced. In addition, when the session management function network element establishes a communication tunnel, the SMF may first send the tenth message to the UPF. If a communication tunnel is established in the SMF network element set to which the SMF belongs, the ninth message and the like may not need to be executed. This effectively reduces previous steps of establishing a communication tunnel by another SMF in the SMF network element set, effectively reduces a size of content of the message, and saves resources.

According to a fourth aspect, this application provides a communication tunnel management method. The method includes:
A user plane function network element receives a seventh message sent by a first session management function network element, where the seventh message includes an identifier of a session management function network element set to which the first session management function network element belongs, the seventh message notifies the user plane function network element of information about a first tunnel; and the user plane function network element sends an eighth message to a remaining session management function network element in the session management function network element set based on the seventh message, where the eighth message notifies that the first tunnel exists.

Based on the foregoing solution, in this embodiment of this application, after receiving the seventh message, a multicast/broadcast session management function network element sends the eighth message to the remaining session management function network element in the session management function network element set, so that SMFs belonging to the same SMF network element set can share one tunnel. Therefore, network resources are effectively saved.

In a possible design, the seventh message may be a PFCP session modification message (PFCP Session Modification, including a PFCP Session Modification Request/Response), a PFCP session establishment message (PFCP Session Establishment, including a PFCP Session Establishment Request/Response), an N4 session modification message (N4 Session Modification, including an N4 Session Modification Request/Response), or an N4 session establishment message (N4 Session Establishment, including an N4 Session Establishment Request/Response).

In a possible design, the seventh message further includes one or more of a packet detection rule PDR, a forwarding action rule FAR, and a packet forwarding control protocol PFCP session context.

According to a fifth aspect, this application provides a communication tunnel management method. The method includes:
A user plane function network element receives a tenth message sent by a session management function network element, where the tenth message requests allocation of information about a first tunnel, and the first tunnel is used for transmitting data of a multicast/broadcast service between a multicast/broadcast user plane function network element controlled by a multicast/broadcast session management function network element and the user plane function network element controlled by the session management function network element; and the user plane function network element sends an eleventh message to the session management function network element if determining that the session management function network element is the 1^{st} session management function network element that sends the tenth message in a plurality of session management function network elements, where the eleventh message includes the information about the first tunnel; or the user plane function network element sends a twelfth message to the session management function network element if determining that the session management function network element is not the 1^{st} session management function network element that sends the tenth message in a plurality of session management function network elements, where the twelfth message indicates that the information about the first tunnel has been allocated.

Based on the foregoing solution, when a tunnel used for transmission between the multicast/broadcast user plane function network element controlled by the multicast/broadcast session management function network element and the user plane function network element controlled by the session management function network element is established, SMFs in a same SMF network element set are enabled to share one communication tunnel, to be specific, the SMFs in the SMF set establish only one N19mb tunnel for a multicast/broadcast service for the UPF, so that network resources can be effectively saved, and system overheads can be reduced.

In a possible design, when the session management function network element is in the plurality of session management function network elements, the identifier of the session management function network element set included in the seventh message in the second aspect and/or the fourth aspect may be understood as an identifier corresponding to the plurality of session management function network elements.

For example, assuming that the plurality of session management function network elements include an SMF 1, an SMF 2, and an SMF 3, the identifier corresponding to the plurality of session management function network elements may be a general identifier, namely, (SMF 1, SMF 2, SMF 3) of the SMF 1, the SMF 2, and the SMF 3.

For another example, the identifier corresponding to the plurality of session management function network elements may be a general term. Assuming that the general term is X, the identifier corresponding to the plurality of session management function network elements may be X.

In a possible design, the plurality of session management function network elements may be represented as a session management function network element group.

For example, one session management function network element group includes a plurality of session management function network elements, and first session management function network element is in the session management function network element group.

When the plurality of session management function network elements are represented as the session management function network element group, the identifier of the session management function network element set included in the seventh message in the second aspect and/or the fourth aspect may be understood as an identifier of the session management function network element group.

In a possible design, the plurality of session management function network elements may be represented as a session management function network element set.

For example, one session management function network element set includes a plurality of session management function network elements, and the session management function network element is in the session management function network element set.

When the plurality of session management function network elements are represented as the session management function network element set, the identifier of the session management function network element set included in the seventh message in the second aspect and/or the fourth aspect may be understood as an identifier of the session management function network element set (SMF set ID).

In a possible design, the plurality of session management function network elements may be represented as a session management function network element list.

For example, one session management function network element list includes a plurality of session management function network elements, and the session management function network element is in the session management function network element list.

When the plurality of session management function network elements are represented as the session management function network element list, the identifier of the session management function network element set included in the seventh message in the second aspect and/or the fourth aspect may be understood as an identifier of the session management function network element list.

It should be noted that the plurality of session management function network elements described in this specification may mean any one of the following meanings: a session management function network element set (SMF set), a session management function network element group, a session management function network element list, or the like including the plurality of session management function network elements. This is not limited.

In a possible design, the eleventh message may be a PFCP session modification message (including a PFCP Session Modification Request/Response), may be a PFCP session establishment message (including a PFCP Session Establishment Request/Response), may be an N4 session establishment message (including an N4 Session Establishment Request/Response), or may be an N4 session modification message (including an N4 Session Modification Request/Response).

In a possible design, the twelfth message may be a PFCP session modification message (including a PFCP Session Modification Request/Response), may be a PFCP session establishment message (including a PFCP Session Establishment Request/Response), may be an N4 session establishment message (including an N4 Session Establishment Request/Response), or may be an N4 session modification message (including an N4 Session Modification Request/Response).

In a possible design, the twelfth message further includes the information about the first tunnel.

According to a sixth aspect, an embodiment of this application provides a communication tunnel management apparatus. The apparatus may be a multicast/broadcast session management function network element, or may be a chip used for the multicast/broadcast session management function network element. The apparatus has a function of implementing the method in any one of the first aspect or the possible implementations of the first aspect. The function may be implemented by hardware, or may be implemented by hardware executing corresponding software. The hardware or the software includes one or more modules corresponding to the function.

According to a seventh aspect, an embodiment of this application provides a communication tunnel management apparatus. The apparatus may be a second session management function network element, or may be a chip used for the second session management function network element. The apparatus has a function of implementing the method in any one of the second aspect or the possible implementations of the second aspect. The function may be implemented by hardware, or may be implemented by hardware executing corresponding software. The hardware or the software includes one or more modules corresponding to the function.

According to an eighth aspect, an embodiment of this application provides a communication tunnel management apparatus. The apparatus may be a first session management function network element, or may be a chip used for the first session management function network element. The apparatus has a function of implementing the method in any one of the third aspect or the possible implementations of the third aspect. The function may be implemented by hardware, or may be implemented by hardware executing corresponding software. The hardware or the software includes one or more modules corresponding to the function.

According to a ninth aspect, an embodiment of this application provides a communication tunnel management apparatus. The apparatus may be a user plane function network element, or may be a chip used for the user plane function network element. The apparatus has a function of implementing the method in any one of the fourth aspect or the possible implementations of the fourth aspect. The function may be implemented by hardware, or may be implemented by hardware executing corresponding software. The hardware or the software includes one or more modules corresponding to the function.

According to a tenth aspect, an embodiment of this application provides a communication tunnel management apparatus. The apparatus may be a user plane function network element, or may be a chip used for the user plane function network element. The apparatus has a function of implementing the method in any one of the fifth aspect or the possible implementations of the fifth aspect. The function may be implemented by hardware, or may be implemented by hardware executing corresponding software. The hardware or the software includes one or more modules corresponding to the function.

According to an eleventh aspect, an embodiment of this application further provides a computer-readable storage medium. The computer-readable storage medium stores instructions. When the instructions are run on a computer, a processor is enabled to perform the method in any one of the first aspect to the fifth aspect or the possible implementations of the first aspect to the fifth aspect

According to a twelfth aspect, an embodiment of this application further provides a computer program product. The computer product includes a computer program. When the computer program runs, a processor is enabled to perform the method in any one of the first aspect to the fifth aspect or the possible implementations of the first aspect to the fifth aspect.

According to a thirteenth aspect, an embodiment of this application further provides a chip system, including a processor and a memory. The memory is configured to store a computer program, and the processor is configured to invoke and run the computer program from the memory, so that a device on which the chip system is installed performs the method in any one of the first aspect to the fifth aspect or the possible implementations of the first aspect to the fifth aspect.

### BRIEF DESCRIPTION OF DRAWINGS

FIG. 1 is a schematic diagram of a first communication system according to this application;
FIG. 2 is a schematic diagram of a second communication system according to this application;
FIG. 3 is a schematic diagram of a multicast/broadcast scenario according to this application;
FIG. 4 is a schematic flowchart of a first communication tunnel management method according to this application;
FIG. 5 is a schematic flowchart of a second communication tunnel management method according to this application;
FIG. 6 is a schematic flowchart of a third communication tunnel management method according to this application;
FIG. 7 is a schematic flowchart of a third communication tunnel management method according to this application;
FIG. 8 is a schematic diagram of a first communication tunnel management scenario according to this application;
FIG. 9 is a schematic diagram of a second communication tunnel management scenario according to this application;
FIG. 10 is a schematic diagram of a third communication tunnel management scenario according to this application;
FIG. 11 is a schematic diagram of a fourth communication tunnel management scenario according to this application;
FIG. 12 is a schematic diagram of a fifth communication tunnel management scenario according to this application;
FIG. 13 is a schematic diagram of a sixth communication tunnel management scenario according to this application;
FIG. 14 is a schematic diagram of a communication tunnel management apparatus according to this application; and
FIG. 15 is a schematic diagram of another communication tunnel management apparatus according to this application.

### DESCRIPTION OF EMBODIMENTS

To describe the technical solutions in this application more clearly and completely, the following describes embodiments of this application with reference to the accompanying drawings.

Embodiments of this application provide a communication tunnel management method. The technical solutions in embodiments of this application can be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5th generation (5th generation, 5G) system, a new radio (new radio, NR) system, a future communication system, or another similar communication system, for example, a 6G system.

A 5G system (which may also be referred to as a new radio system) is used as an example. Specifically, embodiments of this application are specific to an existing multicast/broadcast session management process. An N19mb tunnel between a user plane network element (User Plane Function, UPF) and a multicast/broadcast user plane network element (Multicast/Broadcast User Plane Function, MB-UPF) may be used for transmitting a multicast/broadcast QoS flow at a multicast/broadcast service granularity. However, this scenario has the following problem: In a same session management function (Session Management Function, SMF) network element set (set), when any SMF in the SMF set establishes an N19mb tunnel at a multicast/broadcast service granularity with an MB-SMF, according to the conventional technology, SMFs in the SMF set cannot perceive existence of the N19mb tunnel at the multicast/broadcast service granularity. As a result, there are a plurality of N19mb tunnels for a same multicast/broadcast service for one UPF, causing a waste of resources.

Therefore, this solution needs to resolve the following optimization problems:
(1) How to ensure that only one N19mb tunnel at a multicast/broadcast service granularity is established between an SMF in an SMF set and an MB-SMF node, to save network resources; or when a plurality of session management function network elements control a same user plane function network element, only one N19mb tunnel between the UPF and an MB-UPF is established for one multicast/broadcast service.
(2) How does the MB-SMF node select a proper occasion for releasing the N19mb tunnel with the SMF node at the multicast/broadcast service granularity, to avoid interruption, caused by an improper release occasion, of receiving data of the multicast/broadcast service of a UPF instance managed by another SMF in the SMF set.

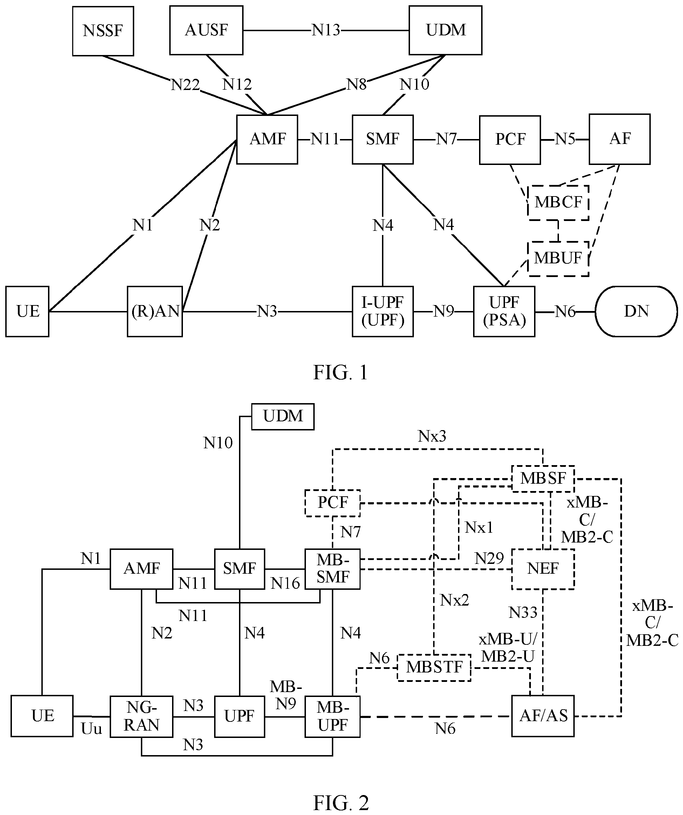

For example, FIG. 1 shows a schematic diagram of an architecture of a communication system to which this application may be applied. The communication system may include a data management network element, an authentication server network element, a mobility management network element, a session management function network element, a policy control network element, and a user plane function network element. Further, the architecture of the communication system further includes an access network device, a terminal device, and a data network (data network, DN) network element.

Further, the communication system may further include a multicast/broadcast control plane function (multicast/broadcast control function, MBCF) network element and a multicast/broadcast user plane function (multicast/broadcast user plane function, MBUF) network element. The policy control network element, the data management network element, the authentication server network element, the mobility management network element, and the session management network element may be connected through a bus. The bus herein means that connection and communication between the network elements in the communication system can be logically implemented. The connection and communication between the network elements in the communication system may be implemented through an interface or a network.

For example, FIG. 1 is described by using an example in which the data management network element is a UDM network element, the authentication server network element is an AUSF network element, the mobility management network element is an AMF network element, the session management function network element is an SMF network element, the policy control network element is a PCF network element, the user plane function network element is a UPF network element, the data network network element is a DN, and the terminal device is UE.

The terminal device may communicate with the AMF network element through a next generation network (next generation, NG) 1 interface (N1 for short), the access network device communicates with the AMF network element through an N2 interface (N2 for short), the access network device communicates with the UPF network element through an N3 interface (N3 for short), the AMF network element communicates with the SMF network element through an N11 interface (N11 for short), the AMF network element communicates with the UDM network element through an N8 interface (N8 for short), the AMF network element communicates with the AUSF network element through an N12 interface (N12 for short), the AMF network element communicates with the PCF network element through an N15 interface (N15 for short), the SMF network element communicates with the PCF network element through an N7 interface (N7 for short), the SMF network element communicates with the UPF network element through an N4 interface (N4 for short), and the UPF network element accesses the data network (data network, DN) through an N6 interface (N6 for short).

The data management network element is mainly configured to manage and store user data such as subscription information and authentication/authorization information. In 5th generation (5th generation, 5G), the data management network element may be a unified data management (unified data management, UDM) network element or a unified data repository (unified data repository, UDR) function network element. In future communication, for example, 6th generation (6th generation, 6G), the data management network element may still be a UDM network element or a UDR network element, or have another name. This is not limited in this application.

The authentication server network element is mainly configured to use the extensible authentication protocol (extensible authentication protocol, EAP) to verify a service function and store a key, to implement authentication and authorization on a user. In 5G, the authentication server network element may be an authentication server function (authentication server function, AUSF) network element. In future communication, for example, 6G, the user plane function network element may still be an AUSF network element or have another name. This is not limited in this application.

The session management function network element is mainly used for session management, and selecting and controlling a user plane function network element in a mobile network. The session management is, for example, session creation, modification, and release. A specific function includes, for example, allocating an internet protocol (internet protocol, IP) address to a user, selecting a user plane function network element that provides a packet forwarding function, and the like. In 5G, the session management function network element may be a session management function (session management function, SMF) network element. In future communication, for example, 6G, the session management function network element may still be an SMF network element or have another name. This is not limited in this application.

The mobility management network element is mainly used for registration, mobility management, and a tracking area update procedure for the terminal device in the mobile network. The mobility management network element terminates a non-access stratum (non-access stratum, NAS) message, completes registration management, connection management, and reachability management, tracking area list (tracking area list, TA list) allocation, mobility management, and the like, and transparently routes a session management (session management, SM) message to the session management function network element. In 5G communication, the mobility management network element may be an access and mobility management function (access and mobility management function, AMF) network element. In future communication, for example, 6G, the mobility management network element may still be an AMF network element or have another name. This is not limited in this application.

The policy control network element is mainly used for user subscription data management, charging policy control, quality of service (quality of service, QoS) control, and the like. In 5G, the policy control network element may be a policy control function (policy control function, PCF) network element. In future communication, for example, 6G, the policy control network element may still be a PCF network element or have another name. This is not limited in this application.

The user plane function network element is mainly used for user plane service processing, for example, packet routing and transmission, packet detection, service usage reporting, quality of service (quality of service, QoS) processing, lawful interception, uplink packet detection, and downlink packet storage. In 5G, the user plane function network element may be a user plane function (user plane function, UPF) network element. In future communication, for example, 6G, the user plane function network element may still be a UPF network element or have another name. This is not limited in this application.

The data network network element is mainly configured to provide a service for a user, for example, a service of an operator, an Internet access service, or a third-party service. In 5G, the data network network element may be a data network (data network, DN) network element. In future communication, for example, 6G, the data network network element may still be a DN network element or have another name. This is not limited in this application.

The access network device is an access device through which the terminal device accesses the communication system in a wireless manner, and may provide a wireless communication function for the terminal device. The access network device may be a base station (base station), an evolved NodeB (evolved NodeB, eNodeB), a transmission (sending and reception) point (transmission reception point, TRP), a next generation NodeB (next generation NodeB, gNB) in a 5G communication system, a base station in a future communication system, an access node in a wireless fidelity (wireless fidelity, Wi-Fi) system, or the like; or may be a module or a unit that completes a part of functions of a base station, for example, may be a central unit (central unit, CU) or a distributed unit (distributed unit, DU). A specific technology and a specific device form that are used for the access network device are not limited in embodiments of this application.

The terminal device may also be referred to as a terminal, user equipment (user equipment, UE), a mobile station, a mobile terminal, or the like. The terminal device may be a mobile phone, a tablet computer, a computer having a wireless transceiver function, a virtual reality terminal device, an augmented reality terminal device, a wireless terminal in industrial control, a wireless terminal in self-driving, a wireless terminal in remote surgery, a wireless terminal in a smart grid, a wireless terminal in transportation safety, a wireless terminal in a smart city, a wireless terminal in a smart home, or the like. A specific technology and a specific device form that are used for the terminal device are not limited in this application.

The MBCF may implement a control plane function of a multicast/broadcast service, and is responsible for management of the multicast/broadcast service. The MBCF may be connected to a server of the multicast/broadcast service, to receive information related to the multicast/broadcast service. For details, refer to the following descriptions of the multicast/broadcast service. Details are not described herein again. In addition, the MBCF may be further connected to the PCF, to create a resource for the multicast/broadcast service, for example, a QoS requirement (refer to the following related descriptions).

It should be noted that the MBCF may be integrated into the PCF or the SMF as a functional module, or may be used as an independent network element (as shown in FIG. 1). This is not limited in this application.

The MBUF may be configured to transmit service data of the multicast/broadcast service. It should be noted that the MBUF may be integrated into the UPF as a functional module, or may be used as an independent network element (as shown in FIG. 1). This is not limited in this application.

It should be noted that forms and quantities of the network elements shown in FIG. 1 are merely used as examples, and do not constitute a limitation on this application. The network architecture in FIG. 1 may further include another network element, for example, a network element or a device such as a network slice selection function (network slice selection function, NSSF), a unified data repository (unified data repository, UDR), or a network repository function (network repository function, NRF). This is not specifically limited. In addition, names of the network elements and the interfaces between the network elements in FIG. 1 are merely examples. During specific implementation, the network elements and the interfaces between the network elements may have other names. This is not specifically limited in embodiments of this application.

For ease of description, subsequently, an example in which the session management function network element is the SMF network element, the user plane function network element is the UPF network element, the data management network element is the UDM network element, the authentication server network element is the AUSF network element, the data network network element is the DN network element, and the terminal device is the UE is used for description is used in this application. In other words, the SMF network element described subsequently in this application may be replaced with the session management function network element, the UPF network element may be replaced with the user plane function network element, the UDM may be replaced with the data management network element, and the UE may be replaced with the terminal device.

Further, an architecture of a communication system to which this application may be applied may be further shown in FIG. 2. The architecture is obtained by extending the architecture shown in FIG. 1. For example, two functional entities such as a multicast/broadcast session management function (Multicast/Broadcast Session Management Function, MB-SMF) network element and a multicast/broadcast user plane function (Multicast/Broadcast User Plane Function, MB-UPF) network element are added to support a multicast/broadcast service/function.

The MB-SMF may implement a control plane function of the multicast/broadcast service, and is responsible for multicast/broadcast service/group/session management. From the perspective of a control plane, the MB-SMF may be connected to an NEF and/or a multicast/broadcast service function (Multicast/Broadcast Service Function, MBSF), for example, for receiving information related to the multicast/broadcast service (for example, descriptions of the multicast/broadcast service).

In addition, the MB-SMF may further be connected to the PCF, for example, may extract a PCC rule related to the multicast/broadcast service. From the perspective of a user plane, the MB-UPF may be connected to a multicast/broadcast service transport function (Multicast/Broadcast Service Transport Function, MBSTF) and/or an AF/AS, for receiving service data of the multicast/broadcast service. It should be noted that the MB-SMF and the SMF may be co-located, or may be separately deployed, and the MB-UPF and the UPF may be co-located, or may be separately deployed. This is not limited in this application.

It should be noted that the name of the MB-SMF or the MB-UPF is an example. In a 5G network, the MB-SMF or the MB-UPF may also have another name. This is not limited in this application.

The architecture of the communication system and a service scenario described in embodiments of this application are intended to describe the technical solutions in embodiments of this application more clearly, but constitute no limitation on the technical solutions provided in embodiments of this application. A person of ordinary skill in the art may learn that the technical solutions provided in embodiments of this application are also applicable to a similar technical problem as the architecture of the communication system evolves and a new service scenario emerges.

It should be understood that FIG. 1 and FIG. 2 are merely simplified schematic diagrams used as examples for ease of understanding. The communication system may further include another network device or another terminal that is not shown in FIG. 1 and FIG. 2.

It should be noted that the "network element" in embodiments of this application may also be referred to as an entity, a device, an apparatus, a module, or the like. This is not particularly limited in this application. In addition, in this application, for ease of understanding and description, the description of the "network element" is omitted in some descriptions. For example, an UPF network element is referred to as an UPF for short. In this case, the "UPF network element" should be understood as an UPF network element or an UPF entity. Descriptions of same or similar cases are omitted below. It may be understood that the network elements or the functions may be network elements in a hardware device, may be software functions running on dedicated hardware, or may be virtualized functions instantiated on a platform (for example, a cloud platform).

In an optional implementation of embodiments of this application, the foregoing network elements or functions may be implemented by one device, or may be implemented by a plurality of devices together, or may be a functional module in one device. This is not specifically limited in embodiments of this application. Network elements having a same function or similar functions may be jointly set.

In addition, it may be understood that a first tunnel in embodiments of this application may be an N19mb tunnel. In addition, with evolution of the architecture of the communication system and emergence of a new service scenario, the first tunnel may alternatively be another tunnel applicable to the new service scenario, or the like. This is not limited herein.

To describe embodiments of this application more briefly, for example, an SMF 1 may be used for representing a first session management function network element, an SMF 2 may be used for representing a second session management function network element, an SMF 3 may be used for representing a third session management function network element, and the like. In other words, the session management function network element mentioned in this specification includes the first session management function network element, the second session management function network element, and the third session management function network element mentioned in this specification.

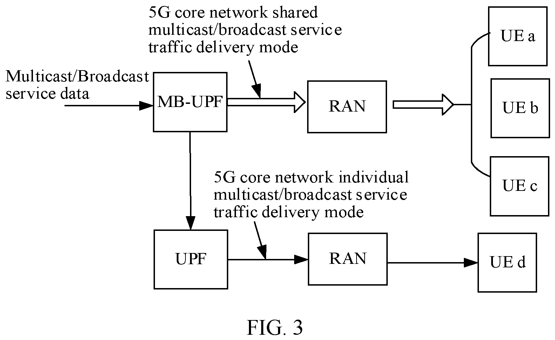

In embodiments of this application, when an access network device does not support a multicast function, data of a multicast service may be transmitted between the access network device and a user plane function network element in a 5G core network individual multicast/broadcast service traffic delivery manner. When an access network device supports a multicast function, data of a multicast service may be transmitted in a 5G core network shared multicast/broadcast service traffic delivery (5GC shared MBS traffic delivery) manner. For example, as shown in FIG. 3, in a 5GC shared MBS traffic delivery manner, data of a multicast service directly reaches a RAN through an MB-UPF and an N3 tunnel between the MB-UPF and the RAN, and the RAN may send, in a point to point (point to point, PTP) or point to multi-point (point to multi-point, PTM) manner, the data of the multicast service to a terminal that joins a multicast session. In a 5G core network individual multicast/broadcast service traffic delivery manner, data of a multicast service is transmitted to a UPF through an MB-UPF and then to a RAN through an N3 tunnel (for example, a PDU session of a terminal) between the UPF and the RAN. The RAN sends the data to the terminal in a point to point manner.

That the access network device does not support the multicast function may be understood as that the access network device does not support transmitting the data of the multicast service in the 5G core network shared multicast/broadcast service traffic delivery (5GC shared MBS traffic delivery) manner. In other words, the access network device supports transmitting the data of the multicast service only in the 5G core network individual multicast/broadcast service traffic delivery (5GC Individual MBS traffic delivery) manner. To be specific, the data of the multicast service is sent to the terminal by using an associated PDU session of the terminal that joins the multicast session.

It should be understood that, after reaching the access network device (for example, the RAN), the data of the multicast service is processed at a service data adaptation protocol (service data adaptation protocol, SDAP) layer, a packet data convergence protocol (packet data convergence protocol, PDCP) layer, a radio link control (radio link control, RLC) layer, a media access control (media access control, MAC) layer, and a physical (physical, PHY) layer of the RAN, and then is sent to each terminal that is to receive the data of the multicast service.

In embodiments of this application, multicast capability information of the access network device may indicate whether the access network device supports the multicast function or indicate whether the access network device has a multicast capability. An access network device that supports the multicast function can identify identification information of the multicast session, and an access network device that does not support the multicast function cannot identify the identification information of the multicast session. That the access network device has the multicast capability may mean that the access network device has one or more of the following functions: The access network device supports transmitting the data of the multicast service in the 5GC shared MBS traffic delivery method shown in FIG. 3, supports enhancement of signaling plane interaction with a core network control plane network element for the multicast service, supports receiving of the data of the multicast service from a core network user plane function network element, supports local processing of the data of the multicast service, and supports point to multi-point sending of the data of the multicast service through an air interface, and configuration of a response message, for the terminal to receive the data of the multicast service. That the access network device does not have the multicast capability may mean that the access network device does not support transmitting the data of the multicast service in the 5GC shared MBS traffic delivery manner shown in FIG. 3, and supports transmitting the data of the multicast service only in the 5GC individual MBS traffic delivery manner shown in FIG. 3.

Identification information of the multicast/broadcast service may include one or more of the identification information of the multicast/broadcast service, context information of a multicast/broadcast session, address information of the multicast/broadcast service, identification information of a PDU session associated with the multicast/broadcast session, a service data flow (service data flow, SDF) identification rule of the multicast/broadcast service, packet filtering (packet filtering) information of the data of the multicast/broadcast service, identification information of a multicast/broadcast group corresponding to the multicast/broadcast service (for example, a temporary mobile group identifier (temporary mobile group identifier, TMGI) of the multicast/broadcast group), a multicast/broadcast service session ID (multicast/broadcast service session ID), a multicast/broadcast service session identifier (MBS session ID), a multicast/broadcast session ID (multicast session ID), an internet protocol (internet protocol, IP) address of an application server (for example, an AF) that provides the data of the multicast/broadcast service, a service identifier (service identifier, service ID) of the multicast/broadcast service, a source-specific IP multicast/broadcast address (source-specific IP multicast address), and a packet detection rule (packet detection rule, PDR) of the multicast/broadcast service. This is not limited herein. It should be understood that the PDR is a set of filters. Each filter is a 5-tuple, including a source address, a destination address, a source port number, a target port number, and a protocol number of the multicast/broadcast service. The PDR is used for filtering the data of the multicast/broadcast service.

A multicast/broadcast service context (session context) corresponding to the multicast/broadcast service is also referred to as an MBS (Multicast/Broadcast Service) context.

The foregoing describes some terms in this application, and the following describes technical features in this application. It should be noted that these explanations are either not intended to limit the protection scope claimed in this application.

In addition, the terms "system" and "network" in embodiments of this application may be used interchangeably. "At least one" means one or more, and "a plurality of" means two or more. The term "and/or" describes an association relationship between associated objects and represents that three relationships may exist. For example, A and/or B may represent the following three cases: Only A exists, both A and B exist, and only B exists. A and B may be in a singular or plural form. The character "/" usually indicates an "or" relationship between the associated objects. At least one of the following items (pieces) or a similar expression thereof refers to any combination of these items, including a singular item (piece) or any combination of plural items (pieces). For example, at least one of a, b, or c may indicate: a, b, c, a and b, a and c, b and c, or a, b, and c, where a, b, and c may be singular or plural.

Unless otherwise stated, ordinal numbers such as "first" and "second" mentioned in embodiments of this application are used for distinguishing between a plurality of objects, and are not intended to limit a sequence, a time sequence, priorities, or importance of the plurality of objects. In addition, terms "include" and "have" in embodiments, claims, and accompanying drawings of this application are not exclusive. For example, a process, a method, a system, a product, or a device including a series of steps or modules is not limited to listed steps or modules, and may further include steps or modules that are not listed.

Based on the foregoing content, this application may be applied to the system architecture shown in FIG. 1 or FIG. 2, and provides a communication tunnel management method, so that SMFs in an SMF set establish only one communication tunnel for a multicast/broadcast service for a shared UPF, to effectively save network resources. In other words, when a plurality of session management function network elements control/share a same user plane function network element, only one N19mb tunnel between a UPF and an MB-UPF is established for one multicast/broadcast service, to effectively save network resources.

In embodiments of this application, there are a plurality of management scenarios for communication tunnel management, and the scenarios are not specifically limited to the following several scenarios:

### Scenario 1: Communication tunnel establishment or update scenario

Based on the scenario 1, there are a plurality of implementations for communication tunnel management, and the implementations are not specifically limited to the following several implementations:
Implementation 1: Each time a session management function network element sends a first message to a multicast/broadcast session management function network element, the first message carries information about a first tunnel.

It is assumed that an SMF 1 is one of a plurality of session management function network elements. The plurality of session management function network elements may be represented as a session management function network element group, a session management function network element set, a session management function network element list, or the like. This is not limited herein.

For better description, in this application, a case in which a plurality of session management function network elements are represented as a session management function network element set is selected for description. For other representation cases of the plurality of session management function network elements, refer to the content of the session management function network element set. For brevity, details are not described herein again. For example, it is assumed that the SMF network element set in the implementation 1 includes the SMF 1 and an SMF 2. When the SMF 1 sends the first message to the MB-SMF, the first message carries the information about the first tunnel. When the SMF 2 sends the first message to the MB-SMF, the first message also carries the information about the first tunnel.

In this application, optionally, the first tunnel is used for transmitting data of a multicast/broadcast service between a multicast/broadcast user plane function network element controlled by the multicast/broadcast session management function network element and a user plane function network element controlled by the first session management function network element. The information about the first tunnel may be information about an N19mb tunnel.

In this application, optionally, the information about the N19mb tunnel may be allocated by the MB-UPF, or may be allocated by the MB-SMF.

The first message requests to receive the data of the multicast/broadcast service.

In this application, optionally, the first message may carry identification information of the multicast/broadcast service. The multicast/broadcast service corresponds to a multicast/broadcast session (MBS session).

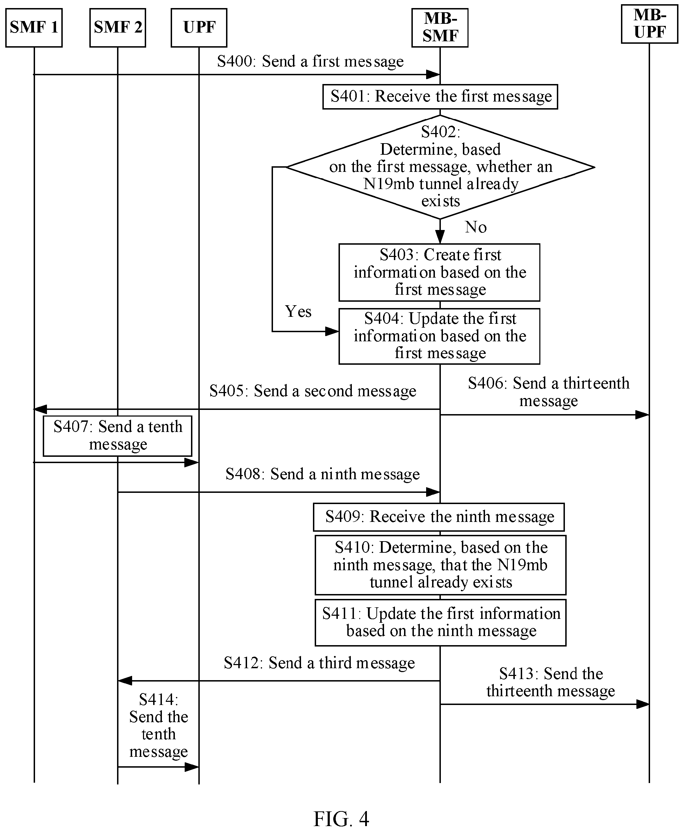

As shown in FIG. 4, based on the implementation 1, an embodiment of this application provides a communication tunnel management method. Specific steps are as follows:
S400: The SMF 1 sends a first message to the MB-SMF, where the first message requests to receive data of a multicast/broadcast service, and the first message carries identification information of the multicast/broadcast service and information about an N19mb tunnel.

In this application, optionally, the first message may be a multicast/broadcast service data reception request (Nmbsmf_Reception_Request), the first message may be a multicast/broadcast session establishment request (Nsmf_MBSSession_Create Request), or the first message may be a multicast/broadcast session update request (Nsmf_MBSSession_Update Request).

In this application, optionally, the SMF 1 may be an SMF in the SMF network element set in which the SMF 1 is located, the SMF 1 may be an intermediate SMF (Intermediate SMF, I-SMF) in the SMF network element set in which the SMF 1 is located, or the SMF 1 may be an I-MB-SMF in the SMF network element set in which the SMF 1 is located.

Identification information of the multicast/broadcast service may be one or more of a name of the multicast/broadcast service, an IP address of the multicast/broadcast service, a multicast/broadcast service session identifier (multicast/broadcast service session ID, MBS session ID), a temporary mobile group identity (temporary mobile group identity, TMGI), a multicast/broadcast service identifier (multicast/broadcast service ID, MBS ID), a service source-specific IP multicast address (source-specific IP multicast address), or the like.

S401: The MB-SMF receives the first message sent by the SMF 1.

S402: The MB-SMF determines, based on the first message, whether an N19mb tunnel already exists.

In an optional manner, the MB-SMF determines whether an N19mb tunnel for transmitting the data of the multicast/broadcast service between the UPF and the MB-UPF exists in stored first information.

S403: After determining that the N19mb tunnel does not exist, the MB-SMF creates first information based on the first message.

In this application, optionally, the first information includes a part or all of the following:
the identification information of the multicast/broadcast service, information about a first tunnel, an identifier of the first session management function network element, an identifier of a session management function network element corresponding to the multicast/broadcast service and the first tunnel, a multicast/broadcast service context corresponding to the multicast/broadcast service, and a quantity of session management function network elements corresponding to the multicast/broadcast service and the first tunnel.

For example, a case in which after determining that the N19mb tunnel does not exist, the MB-SMF creates the first information based on the first message may be as follows:
The MB-SMF establishes an association relationship between the SMF 1, a TMGI, and an N19mb tunnel represented by DL Tunnel Info; the MB-SMF establishes an association relationship between the SMF 1, a TMGI, and a PFCP session context corresponding to the TMGI; the MB-SMF establishes an association relationship between the SMF 1, a TMGI, and a multicast/broadcast PFCP session context corresponding to the TMGI; or the MB-SMF establishes an association relationship between the SMF 1, a TMGI, and a multicast/broadcast service PFCP session context corresponding to the TMGI.

S404: After determining that the N19mb tunnel exists, the MB-SMF updates the first information based on the first message.

In this application, there are a plurality of cases in which the MB-SMF updates the first information. The plurality of cases are not specifically limited to the following several cases:
Case 1: When the first information includes the identification information of the multicast/broadcast service, the information about the first tunnel, the identifier of the first session management function network element, and the quantity of session management function network elements corresponding to the multicast/broadcast service and the first tunnel, the identifier of the first session management function network element is added to the first information, and the quantity of session management function network elements corresponding to the multicast/broadcast service and the first tunnel is updated.
Case 2: When the first information includes the identification information of the multicast/broadcast service, the information about the first tunnel, and the identifier of the first session management function network element, the identifier of the first session management function network element is added to the first information.
Case 3: When the first information includes the identification information of the multicast/broadcast service, the information about the first tunnel, and the quantity of session management function network elements corresponding to the multicast/broadcast service and the first tunnel, the quantity of session management function network elements corresponding to the multicast/broadcast service and the first tunnel is updated.
Case 4: When the first information includes the identification information of the multicast/broadcast service, the information about the first tunnel, the identifier of the session management function network element corresponding to the multicast/broadcast service and the first tunnel, and the quantity of session management function network elements corresponding to the multicast/broadcast service and the first tunnel, the identifier of the first session management function network element is added to the first information, and the quantity of session management function network elements corresponding to the multicast/broadcast service and the first tunnel is updated.
Case 5: When the first information includes the identification information of the multicast/broadcast service, the information about the first tunnel, and the multicast/broadcast service context corresponding to the multicast/broadcast service, the identifier of the first session management function network element is added to the multicast/broadcast service context corresponding to the multicast/broadcast service.

S405: The MB-SMF sends a second message to the SMF 1.

In this application, optionally, the second message may be a response message based on the first message. For example, the second message may indicate that the N19mb tunnel exists, and may be understood as indicating that the N19mb tunnel is to be shared. For another example, the second message may alternatively indicate that the N19mb tunnel is successfully established.

In this application, optionally, the second message may be a multicast/broadcast session establishment response or a multicast/broadcast session update response.

In this application, optionally, the second message may include one or more of the identification information of the multicast/broadcast service, information about the N19mb tunnel, an indication indicating that the N19mb tunnel exists, and a notification indicating that the N19mb tunnel is successfully established.

S406: The MB-SMF sends a thirteenth message to the MB-UPF.

In this application, optionally, the thirteenth message is used for updating the information about the N19mb tunnel for transmitting the data of the multicast/broadcast service between the multicast/broadcast user plane function network element controlled by the multicast/broadcast session management function network element and the user plane function network element controlled by the first session management function network element. For example, the thirteenth message may indicate the MB-UPF to release the N19mb tunnel; or the thirteenth message may indicate the MB-UPF to establish the N19mb tunnel. The thirteenth message may be a fifth message.

In this application, optionally, the fifth message may include a packet forwarding control protocol (Packet Forwarding Control Protocol, PFCP) message, for example, may be a PFCP session establishment/update (PFCP Session Establishment/Modification) message, an N4 session establishment/update (N4 Session Establishment/Modification) message, an N4mb session establishment/update (N4mb Session Establishment/Modification) message, or another message. This is not limited herein. The fifth message may further include the information about the N19mb tunnel.

For example, the fifth message may be a PFCP session modification message (PFCP Session Modification Request/Response), a PFCP session establishment message (PFCP Session Establishment Request/Response), a multicast/broadcast PFCP session modification message (Multicast/Broadcast PFCP Session Modification Request/Response), a multicast/broadcast PFCP session establishment message (Multicast/Broadcast PFCP Session Establishment Request/Response), a multicast/broadcast service PFCP session modification message (Multicast/Broadcast Service PFCP Session Modification Request/Response), a multicast/broadcast service PFCP session establishment message (Multicast/Broadcast Service PFCP Session Establishment Request/Response), an N4 session establishment/update (N4 Session Establishment/Modification) message, or an N4mb session establishment/update (N4mb Session Establishment/Modification) message, or may have another name. This is not limited in embodiments of this application.

S407: The SMF 1 sends a tenth message to the UPF.

In this application, optionally, the tenth message may be a PFCP session modification message (including a PFCP Session Modification Request/Response), may be a PFCP session establishment message (including a PFCP Session Establishment Request/Response), may be an N4 session establishment message (including an N4 Session Establishment Request/Response), or may be an N4 session modification message (including an N4 Session Modification Request/Response).

For example, after receiving the second message sent by the MB-SMF, the SMF 1 sends a PFCP session establishment message, a PFCP session modification message, an N4 session modification message, or an N4 session establishment message to the UPF. For example, the message may be a PFCP/N4 session establishment/modification request (PFCP/N4 Session Establishment/Modification Request), where the request carries an identifier (for example, a TMGI) of the multicast/broadcast service, a packet detection rule (Packet Detection Rule, PDR) and a forwarding action rule (Forwarding Action Rule, FAR) related to the multicast/broadcast service, and the like.

For example, the SMF 1 may include identification information related to the data of the multicast/broadcast service in the PFCP/N4 session establishment/update request. The identification information may be a TMGI, a multicast/broadcast session ID, the name of the multicast/broadcast service, a correspondence between the identifier of the multicast service and DL Tunnel Info related to the multicast/broadcast service, or the like.

For another example, the SMF 1 includes, in the PFCP/N4 session establishment/update request, identification information related to the data of the multicast/broadcast service, where the identification information may be a TMGI, a multicast/broadcast session ID, the name of the multicast/broadcast service, or the like; and includes a packet detection rule related to the data of the multicast/broadcast service, where the packet detection rule includes packet detection information (Packet Detection Information, PDI), the packet detection information includes a local fully qualified tunnel endpoint identifier (Local Fully Qualified Tunnel Endpoint ID, F-TEID), and a value of the local fully qualified tunnel endpoint identifier may be the information about the N19mb tunnel.

For another example, the SMF 1 includes, in the PFCP/N4 session establishment/update request, identification information related to the data of the multicast/broadcast service, where the identification information may be a TMGI, a multicast/broadcast session ID, the name of the multicast/broadcast service, or the like; and includes packet detection information related to the data of the multicast/broadcast service, where the packet detection information includes a local fully qualified tunnel endpoint identifier, and a value of the local fully qualified tunnel endpoint identifier is the information about the N19mb tunnel.

For another example, the SMF 1 includes a packet detection rule related to the data of the multicast/broadcast service in the PFCP/N4 session establishment/update request, where the packet detection rule includes packet detection information, the packet detection information includes a local fully qualified tunnel endpoint identifier, and a value of the local fully qualified tunnel endpoint identifier is the information about the N19mb tunnel.

It may be understood that, in this case, when establishing a PFCP session with the UPF, the SMF 1 already knows that an N19mb tunnel associated with the PFCP session is specific to the TMGI. Therefore, the identifier of the multicast/broadcast service does not need to be included, and may be learned of by using the PFCP session because a PFCP session context of the PFCP session has the ID.

For another example, the SMF 1 includes packet detection information related to the data of the multicast/broadcast service in the PFCP/N4 session establishment/update request, where the packet detection information includes a local fully qualified tunnel endpoint identifier, and a value of the local fully qualified tunnel endpoint identifier is the information about the N19mb tunnel.

It may be understood that, in this case, when establishing a PFCP session with the UPF 1, the SMF 1 already knows that an N19mb tunnel associated with the PFCP session is specific to the TMGI. Therefore, the identifier of the multicast/broadcast service does not need to be included, and may be learned of by using the PFCP session because a PFCP session context of the PFCP session has the ID.

It should be noted that the PFCP session establishment request/response in this step may alternatively be replaced with an N4 session establishment request/response, a multicast broadcast PFCP session establishment request/response, or a multicast/broadcast PFCP session establishment request/response. The PFCP session modification request/response in this step may alternatively be replaced with an N4 session modification request/response, a multicast broadcast PFCP session modification request/response, or a multicast/broadcast PFCP session modification request/response, or may have another name. This is not limited in this embodiment of this application.

S408: The SMF 2 sends a ninth message to the MB-SMF, where the ninth message requests to receive the data of the multicast/broadcast service, and the ninth message carries the identification information of the multicast/broadcast service and the information about the N19mb tunnel.

In this application, optionally, the SMF 1 and the SMF 2 belong to one SMF network element set.

In this application, optionally, the ninth message may be a multicast/broadcast service data reception request (Nmbsmf_Reception_Request), the ninth message may be a multicast/broadcast session establishment request (Nsmf_MBSSession_Create Request), or the ninth message may be a multicast/broadcast session update request (Nsmf_MBSSession_Update Request).

In this application, optionally, the SMF 2 may be an SMF in the SMF network element set in which the SMF 2 is located, the SMF 2 may be an intermediate SMF (Intermediate SMF, I-SMF) in the SMF network element set in which the SMF 2 is located, or the SMF 2 may be an I-MB-SMF in the SMF network element set in which the SMF 2 is located.

In this application, optionally, the ninth message may be the same as the first message.

S409: The MB-SMF receives the ninth message sent by the SMF 2.

S410: The MB-SMF determines, based on the ninth message, that the N19mb tunnel already exists.

It can be learned from the descriptions of S400 to S407 that the first information stored in the MB-SMF already includes the N19mb tunnel for transmitting the data of the multicast/broadcast service between the UPF and the MB-UPF.

S411: The MB-SMF updates the first information based on the ninth message.

In this application, there are a plurality of cases in which the MB-SMF updates the first information. The plurality of cases are not specifically limited to the following several cases:
Case 1: When the first information includes the identification information of the multicast/broadcast service, the information about the first tunnel, the identifier of the first session management function network element, and the quantity of session management function network elements corresponding to the multicast/broadcast service and the first tunnel, an identifier of the second session management function network element is added to the first information, and the quantity of session management function network elements corresponding to the multicast/broadcast service and the first tunnel is updated.
Case 2: When the first information includes the identification information of the multicast/broadcast service, the information about the first tunnel, and the identifier of the first session management function network element, an identifier of the second session management function network element is added to the first information.
Case 3: When the first information includes the identification information of the multicast/broadcast service, the information about the first tunnel, and the quantity of session management function network elements corresponding to the multicast/broadcast service and the first tunnel, the quantity of session management function network elements corresponding to the multicast/broadcast service and the first tunnel is updated.
Case 4: When the first information includes the identification information of the multicast/broadcast service, the information about the first tunnel, the identifier of the session management function network element corresponding to the multicast/broadcast service and the first tunnel, and the quantity of session management function network elements corresponding to the multicast/broadcast service and the first tunnel, an identifier of the second session management function network element is added to the first information, and the quantity of session management function network elements corresponding to the multicast/broadcast service and the first tunnel is updated.
Case 5: When the first information includes the identification information of the multicast/broadcast service, the information about the first tunnel, and the multicast/broadcast service context corresponding to the multicast/broadcast service, an identifier of the second session management function network element is added to the multicast/broadcast service context corresponding to the multicast/broadcast service.

S412: The MB-SMF sends a third message to the SMF 2.

In this application, optionally, the third message may be a response message based on the ninth message. For example, the third message may indicate that the N19mb tunnel exists, and may be understood as indicating that the N19mb tunnel is to be shared. For another example, the third message may alternatively indicate that the N19mb tunnel is successfully established.

In this application, optionally, the third message may be a multicast/broadcast session establishment response or a multicast/broadcast session update response.

In this application, optionally, the third message may include one or more of the identification information of the multicast/broadcast service, the information about the N19mb tunnel, the indication indicating that the N19mb tunnel exists, and the notification indicating that the N19mb tunnel is successfully established.

In this application, optionally, the third message may be the same as the second message.

S413: The MB-SMF sends a thirteenth message to the MB-UPF. The thirteenth message may be the fifth message.

S414: The SMF 2 sends the tenth message to the UPF.

For example, after receiving the third message sent by the MB-SMF, the SMF 2 sends a PFCP session establishment message, a PFCP session modification message, an N4 session modification message, or an N4 session establishment message to the UPF 2. For example, the message may be a PFCP/N4 session establishment/modification request (PFCP/N4/N4mb Session Establishment/Modification Request), where the request carries the identifier (for example, the TMGI) of the multicast/broadcast service, the packet detection rule (Packet Detection Rule, PDR) and the forwarding action rule (Forwarding Action Rule, FAR) related to the multicast/broadcast service, and the like.

For example, the SMF 2 may include the identification information related to the data of the multicast/broadcast service in the PFCP/N4 session establishment/update request. The identification information may be the TMGI, the multicast/broadcast session ID, the name of the multicast/broadcast service, the correspondence between the identifier of the multicast service and the DL Tunnel Info related to the multicast/broadcast service, or the like.

For another example, the SMF 2 includes, in the PFCP/N4 session establishment/update request, the identification information related to the data of the multicast/broadcast service, where the identification information may be the TMGI, the multicast/broadcast session ID, the name of the multicast/broadcast service, or the like; and includes the packet detection rule related to the data of the multicast/broadcast service, where the packet detection rule includes the packet detection information (Packet Detection Information, PDI), the packet detection information includes the local fully qualified tunnel endpoint identifier (Local Fully Qualified Tunnel Endpoint ID, F-TEID), and the value of the local fully qualified tunnel endpoint identifier may be the information about the N19mb tunnel.

For another example, the SMF 2 includes, in the PFCP/N4 session establishment/update request, the identification information related to the data of the multicast/broadcast service, where the identification information may be the TMGI, the multicast/broadcast session ID, the name of the multicast/broadcast service, or the like; and includes the packet detection information related to the data of the multicast/broadcast service, where the packet detection information includes the local fully qualified tunnel endpoint identifier, and the value of the local fully qualified tunnel endpoint identifier is the information about the N19mb tunnel.

For another example, the SMF 2 includes the packet detection rule related to the data of the multicast/broadcast service in the PFCP/N4 session establishment/update request, where the packet detection rule includes the packet detection information, the packet detection information includes the local fully qualified tunnel endpoint identifier, and the value of the local fully qualified tunnel endpoint identifier is the information about the N19mb tunnel.

It may be understood that, in this case, when establishing a PFCP session with the UPF 2, the SMF 2 already knows that an N19mb tunnel associated with the PFCP session is specific to the TMGI. Therefore, the identifier of the multicast/broadcast service does not need to be included, and may be learned of by using the PFCP session because a PFCP session context of the PFCP session has the ID.

For another example, the SMF 2 includes the packet detection information related to the data of the multicast/broadcast service in the PFCP/N4 session establishment/update request, where the packet detection information includes the local fully qualified tunnel endpoint identifier, and the value of the local fully qualified tunnel endpoint identifier is the information about the N19mb tunnel.

It may be understood that, in this case, when establishing a PFCP session with the UPF 2, the SMF 2 already knows that an N19mb tunnel associated with the PFCP session is specific to the TMGI. Therefore, the identifier of the multicast/broadcast service does not need to be included, and may be learned of by using the PFCP session because a PFCP session context of the PFCP session has the ID.

It should be noted that the PFCP session establishment request/response in this step may alternatively be replaced with an N4 session establishment request/response, a multicast broadcast PFCP session establishment request/response, or a multicast/broadcast PFCP session establishment request/response. The PFCP session modification request/response in this step may alternatively be replaced with an N4 session modification request/response, a multicast broadcast PFCP session modification request/response, or a multicast/broadcast PFCP session modification request/response, or may have another name. This is not limited in this embodiment of this application.

Based on the foregoing solution, when a tunnel used for transmission between the multicast/broadcast user plane function network element controlled by the multicast/broadcast session management function network element and the user plane function network element controlled by the session management function network element is established, SMFs in a same SMF network element set are enabled to share one communication tunnel, to be specific, the SMFs in the SMF set establish only one N19mb tunnel for a multicast/broadcast service for the UPF, so that network resources can be effectively saved, and system overheads can be reduced.

Implementation 2: A session management function network element determines whether an eighth message sent by a user plane function network element has been received.

In this application, optionally, the eighth message notifies that a first tunnel exists. For descriptions of the first tunnel, refer to the content in the implementation 1. For brevity, details are not described herein again.

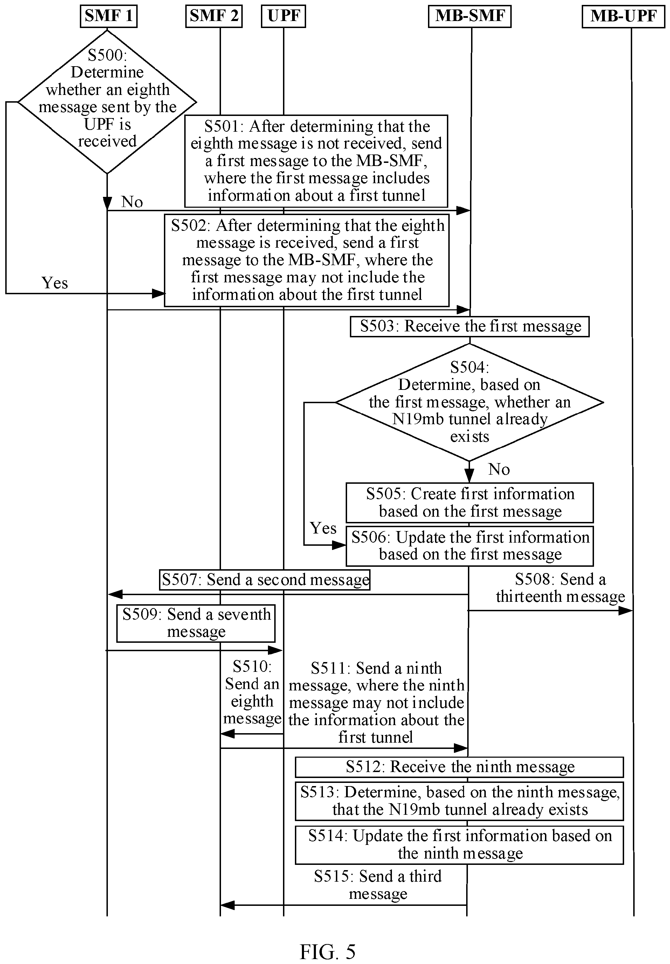

As shown in FIG. 5, based on the implementation 2, an embodiment of this application provides a communication tunnel management method. Specific steps are as follows:
S500: An SMF 1 determines whether an eighth message sent by a UPF is received, and if yes, performs S502; or if not, performs S501.

In this application, optionally, the SMF 1 may determine, in a plurality of manners, whether the eighth message sent by the UPF is received. The plurality of manners are not specifically limited to the following several manners:
The SMF 1 determines whether information about an N19mb tunnel for a multicast/broadcast service has been received by using a PFCP association level message (PFCP Association Level message); the SMF 1 determines whether information about an N19mb tunnel for a multicast/broadcast service has been received by using a multicast/broadcast PFCP association level message (Multicast/Broadcast PFCP Association Level message); the SMF 1 determines whether information about an N19mb tunnel for a multicast/broadcast service has been received by using a multicast/broadcast service PFCP association level message (multicast/broadcast Service PFCP Association Level message); or the SMF 1 determines whether information about an N19mb tunnel for a multicast/broadcast service has been received by using a PFCP node level (PFCP Node level) message.

The SMF 1 may further determine whether a PFCP session context for the multicast/broadcast service, a multicast/broadcast PFCP session context, or a multicast/broadcast service PFCP session context has been received by using the PFCP association level message; the SMF 1 determines whether a PFCP session context for the multicast/broadcast service, a multicast/broadcast PFCP session context, or a multicast/broadcast service PFCP session context has been received by using the multicast/broadcast PFCP association level message; the SMF 1 determines whether a PFCP session context for the multicast/broadcast service, a multicast/broadcast PFCP session context, or a multicast/broadcast service PFCP session context has been received by using the multicast/broadcast service PFCP association level message; or the SMF 1 determines whether a PFCP session context for the multicast/broadcast service, a multicast/broadcast PFCP session context, or a multicast/broadcast service PFCP session context has been received by using the PFCP node level message.

S501: After determining that the eighth message sent by an MB-SMF is not received, the SMF 1 sends a first message to the MB-SMF.

In this case, the first message includes information about the first tunnel.

S502: After determining that the eighth message sent by the MB-SMF is received, the SMF 1 sends a first message to the MB-SMF.

In this case, the first message may not need to include the information about the first tunnel.

For example, the first message may include an identifier of the multicast/broadcast service and/or an indication associated with the first tunnel.

S503: The MB-SMF receives the first message sent by the SMF 1.

S504: The MB-SMF determines, based on the first message, whether an N19mb tunnel already exists.

S505: After determining that the N19mb tunnel does not exist, the MB-SMF creates first information based on the first message.

For details, refer to the content descriptions of S403. For brevity, details are not described herein again.

S506: After determining that the N19mb tunnel exists, the MB-SMF updates the first information based on the first message.

For details, refer to the content descriptions of S404. For brevity, details are not described herein again.

S507: The MB-SMF sends a second message to the SMF 1.

S508: The MB-SMF sends a thirteenth message to an MB-UPF. The thirteenth message may be a fifth message.

For descriptions of a tenth message in this step, refer to the content of S407. For brevity, details are not described herein again.

S509: The SMF 1 sends a seventh message to the UPF.

In this application, optionally, the seventh message includes an identifier of an SMF network element set to which the SMF 1 belongs. The seventh message notifies the UPF of information about the N19mb tunnel.

In this application, optionally, the seventh message notifies the UPF of the identifier of the SMF network element set to which the SMF 1 belongs, so that the UPF sends the information about the established first tunnel to another SMF in the SMF network element set. In this way, SMFs in one SMF set establish only one N19mb tunnel for a multicast/broadcast service for a UPF, to effectively save network resources and reduce system overheads.

In addition, in this application, optionally, to effectively reduce signaling overheads, if the SMF 1 determines that the eighth message sent by the UPF is received, the SMF 1 may not need to send the seventh message to the UPF. It may be understood that if the UPF does not receive the seventh message sent by the SMF 1, the UPF does not need to send the eighth message to the SMF either.

S510: The UPF sends the eighth message to a remaining SMF in the SMF network element set based on the seventh message.

In this application, optionally, the eighth message notifies that the first tunnel exists.

For example, the UPF notifies, by using a PFCP association (Association) level message, a PFCP association message, or a PFCP node level message, another SMF in the SMF network element set of downlink tunnel information (DL Tunnel Info), a packet detection rule, packet detection information, the PFCP session context, the multicast/broadcast PFCP session context, or the multicast/broadcast PFCP session context related to the multicast/broadcast service.

Before establishing a PFCP session with the UPF, each SMF in the SMF set needs to first establish a PFCP association with the UPF. For example, the association is established by carrying the identifier of the same SMF network element set. Therefore, each SMF that establishes the PFCP association with the UPF in the SMF network element set has the identifier of the same SMF network element set. Therefore, the UPF may notify, by using the PFCP association level message, another SMF in the SMF network element set of the downlink tunnel information, the packet detection rule, the packet detection information, the PFCP session context, the multicast/broadcast PFCP session context, or the multicast/broadcast service PFCP session context related to the multicast/broadcast service.

It is assumed that the SMF network element set includes the SMF 1, an SMF 2, and an SMF 3. When sending the eighth message to a remaining session management function network element in the SMF network element set based on the seventh message, the UPF further sends the eighth message to the SMF 2 and the SMF 3, and the SMF 2 successfully receives the eighth message notified by the UPF.

S511: The SMF 2 sends a ninth message to the MB-SMF, where the ninth message requests to receive data of the multicast/broadcast service.

Because the SMF 2 and the SMF 1 belong to the same SMF network element set, when the UPF sends the eighth message to the remaining session management function network element in the SMF network element set based on the seventh message, it is assumed that the SMF 2 successfully receives the eighth message. Therefore, to effectively save resources, the ninth message sent by the SMF 2 to the MB-SMF may not include the information about the first tunnel.

For example, the ninth message may include the identifier of the multicast/broadcast service and/or the indication associated with the first tunnel.

S512: The MB-SMF receives the ninth message sent by the SMF 2.

S513: The MB-SMF determines, based on the ninth message, that the N19mb tunnel already exists.

It can be learned from the descriptions of S500 to S510 that the first information stored in the MB-SMF already includes the N19mb tunnel for transmitting the data of the multicast/broadcast service between the UPF and the MB-UPF.

S514: The MB-SMF updates the first information based on the ninth message.

S515: The MB-SMF sends a third message to the SMF 2.

In this application, optionally, the third message may be a response message based on the ninth message. For example, the third message may indicate that the N19mb tunnel exists, and may be understood as indicating that the N19mb tunnel is to be shared. For another example, the third message may alternatively indicate that the N19mb tunnel is successfully established.

In this application, optionally, the third message may be a multicast/broadcast session establishment response or a multicast/broadcast session update response.

In this application, optionally, the third message may include one or more of identification information of the multicast/broadcast service, the information about the N19mb tunnel, an indication indicating that the N19mb tunnel exists, and a notification indicating that the N19mb tunnel is successfully established.

In this application, optionally, the third message may be the same as the second message.

For example, it is assumed that the SMF 1 and the SMF 2 belong to one SMF set. The SMF 1 first establishes or updates a communication tunnel with the UPF.

The SMF 1 first determines whether the SMF 1 has received the information that is about the N19mb tunnel for the multicast service and that is notified by the UPF by using a message at a PFCP association granularity. If not, the MB-SMF or the UPF allocates information about an N19mb tunnel, and the MB-SMF establishes a triplet (the SMF 1, the multicast service ID, and the N19mb tunnel). After receiving the information about the N19mb tunnel, the UPF notifies/indicates the information about the N19mb tunnel related to the multicast/broadcast service to another SMF in the SMF set.

Similarly, the SMF 2 first determines whether the SMF 2 has received the information that is about the N19mb tunnel for the multicast service and that is notified by the UPF by using a message at a PFCP association granularity. Because the SMF 1 is the 1^{st} SMF, the SMF 2 has received the information about the N19mb tunnel for the multicast service before. Therefore, when sending a multicast/broadcast session establishment/update request to the MB-SMF, the SMF 2 does not carry a tunnel identifier allocated by the SMF 2 or the UPF, the multicast/broadcast session establishment/update request sent by the SMF 2 is to establish an association, with an upstream node, for the N19mb tunnel for the multicast service. After receiving the multicast/broadcast session establishment/update request sent by the SMF 2, the MB-SMF adds the SMF 2 to the triplet, that is, ((SMF 1, SMF 2), the multicast service ID, the information about the N19mb tunnel).

Based on the foregoing solution, it can be effectively ensured that SMFs in an SMF network element set establish only one N19mb tunnel for a multicast/broadcast service for a UPF, to effectively save network resources. In addition, after the 1^{st} SMF network element in the SMF network element set creates the first tunnel, the 1^{st} SMF network element sends, to the UPF, the identifier of the SMF network element set to which the 1^{st} SMF network element belongs, so that the UPF can send the information about the first tunnel to another SMF in the SMF network element set. Therefore, when the another SMF in the SMF network element set subsequently performs a process such as establishing a communication tunnel, a quantity of signaling interaction times, and/or a size of signaling content can be effectively reduced. For example, when the another SMF in the SMF network element set sends, to the UPF, a message requesting to receive the data of the multicast/broadcast service, the message may not need to carry the information about the first tunnel. This effectively reduces previous steps of establishing the communication tunnel by the another SMF in the SMF network element set, and the like, effectively reduces a content size of the message, and saves resources.

Implementation 3: A user plane function network element performs communication tunnel management based on a received tenth message.

For brief description, the implementation 3 is described only starting from receiving the tenth message by the user plane function network element. A procedure before the user plane function network element receives the tenth message may be implemented with reference to the content in the implementation 1 and/or the implementation 2. Details are not described herein again.

It is assumed that in a scenario of the implementation 3, a plurality of SMFs control/share one UPF, for example, in a scenario of an SMF set or an SMF network element set (SMF set), the SMF network element set includes an SMF 1 and an SMF 2, and the SMF 1 first sends a tenth message to the UPF, to complete establishment of a communication tunnel.

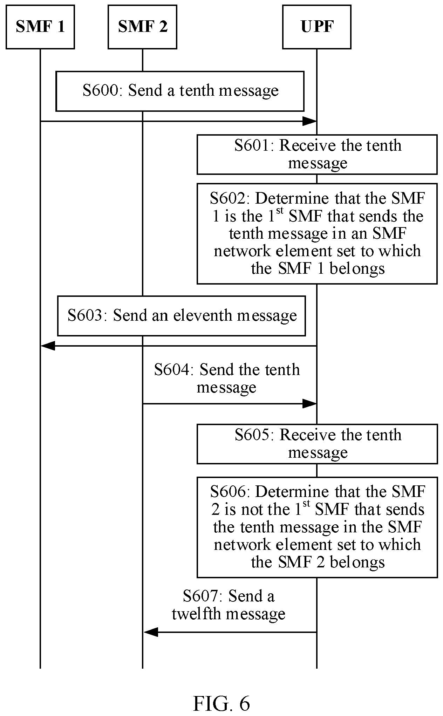

As shown in FIG. 6, based on the implementation 3, an embodiment of this application provides a communication tunnel management method. Specific steps are as follows:
S600: The SMF 1 sends a tenth message to the UPF.

In this application, optionally, the tenth message may be a PFCP session modification message (including a PFCP Session Modification Request/Response), may be a PFCP session establishment message (including a PFCP Session Establishment Request/Response), may be an N4 session establishment message (including an N4 Session Establishment Request/Response), or may be an N4 session modification message (including an N4 Session Modification Request/Response).

S601: The UPF receives the tenth message sent by the SMF 1.

S602: The UPF determines that the SMF 1 is the 1^{st} SMF that sends the tenth message in the SMF network element set to which the SMF 1 belongs.

S603: The UPF sends an eleventh message to the SMF 1.

In this application, optionally, the eleventh message includes information about a first tunnel.

In this application, optionally, after the UPF determines that the SMF 1 is the 1^{st} SMF that sends the tenth message in the SMF network element set, it may be understood that no SMF in the SMF set establishes a communication tunnel for transmitting data of a multicast/broadcast service, namely, the first tunnel. Therefore, the UPF may include the information about the allocated first tunnel in information fed back to the SMF 1. For example, the UPF may send the eleventh message to the SMF 1, and the eleventh message includes the information about the first tunnel.

In this application, optionally, the eleventh message may be a PFCP session modification message (including a PFCP Session Modification Request/Response), may be a PFCP session establishment message (including a PFCP Session Establishment Request/Response), may be an N4 session establishment message (including an N4 Session Establishment Request/Response), or may be an N4 session modification message (including an N4 Session Modification Request/Response).

In this application, there are a plurality of manners in which the UPF determines that the SMF 1 is the 1^{st} SMF that sends the tenth message in the SMF network element set. The plurality of manners are not specifically limited to the following several manners.

Determining manner 1: Before receiving the tenth message sent by the SMF 1, the UPF has not received any tenth message sent by any SMF in the SMF network element set.

For example, when the SMF 1 in the SMF network element set sends the tenth message to the UPF for the first time, the UPF determines that the SMF 1 is the 1^{st} SMF that sends the tenth message. Then, when the SMF 2 in the SMF network element set sends the tenth message to the UPF, the UPF determines that the SMF 2 is not the 1^{st} SMF that sends the tenth message. After releasing the first tunnel, when the SMF 1 sends the tenth message to the UPF again, the UPF determines that the SMF 1 is not the 1^{st} SMF that sends the tenth message.

Determining manner 2: After receiving the tenth message sent by the SMF 1, the UPF determines that the first tunnel does not exist in the SMF network element set.

For example, when the SMF 1 in the SMF network element set sends the tenth message to the UPF for the first time, and the first tunnel does not exist in the SMF network element set, the UPF determines that the SMF 1 is the 1^{st} SMF that sends the tenth message. Then, when the SMF 2 in the SMF network element set sends the tenth message to the UPF, because the first tunnel already exists in the SMF network element set, the UPF determines that the SMF 2 is not the 1^{st} SMF that sends the tenth message. After both the SMF 1 and the SMF 2 release the first tunnel, when an SMF 3 in the SMF network element set sends the tenth message to the UPF, because the first tunnel does not exist in the SMF network element set, the UPF determines that the SMF 3 is the 1^{st} SMF that sends the tenth message.

Further, in the implementation 3, the UPF may obtain an identifier of the SMF network element set by using the content of the implementation 2, to determine the identifier of the SMF network element set to which the SMF of the received message belongs.

In this application, optionally, the UPF may determine, based on a correspondence between an identifier of an SMF network element set and an SMF identifier, an identifier of the SMF of the received message, and the previously obtained identifier of the SMF network element set, the SMF network element set to which the SMF of the received message belongs. The correspondence between the identifier of the SMF network element set and the SMF identifier may be maintained by the UPF; or may be maintained by a third-party device, and the UPF may obtain the correspondence by communicating with the third-party device.

In this application, optionally, the tenth message received by the UPF may include the identifier of the SMF network element set to which the SMF belongs, so that the UPF directly determines, based on the tenth message, the SMF network element set to which the SMF belongs.

S604: The SMF 2 sends the tenth message to the UPF.

S605: The UPF receives the tenth message sent by the SMF 2.

In this application, optionally, the tenth message may be a PFCP session modification message (including a PFCP Session Modification Request/Response), may be a PFCP session establishment message (including a PFCP Session Establishment Request/Response), may be an N4 session establishment message (including an N4 Session Establishment Request/Response), or may be an N4 session modification message (including an N4 Session Modification Request/Response).

S606: The UPF determines that the SMF 2 is not the 1^{st} SMF that sends the tenth message in the SMF network element set to which the SMF 2 belongs.

S607: The UPF sends a twelfth message to the SMF 1.

In this application, optionally, the twelfth message indicates that the information about the first tunnel has been allocated.

Further, in this application, there are a plurality of manners in which the UPF indicates, by using the twelfth message, to the SMF 2 that the information about the first tunnel has been allocated. The plurality of manners are not specifically limited to the following several manners:

### Indication manner 1: explicit indication

In this application, the twelfth message sent by the UPF to the SMF 2 may include the information about the first tunnel, so that the SMF 2 may directly determine the first tunnel based on the twelfth message.

### Indication manner 2: implicit indication

In this application, the twelfth message sent by the UPF to the SMF 2 indicates that the information about the first tunnel has been allocated, and the twelfth message does not include the information about the first tunnel.

For example, the twelfth message may indicate a status of the first tunnel in a binary manner. For example, a binary digit 0 indicates that the information about the first tunnel does not exist, and a binary digit 1 indicates that the information about the first tunnel has been allocated. For example, after determining that the SMF 2 is not the 1^{st} SMF that sends the tenth message in the SMF network element set, the UPF sends the twelfth message to the SMF network element set. The twelfth message may include the binary digit 1 indicating that the information about the first tunnel has been allocated.

In this application, optionally, the twelfth message may be a PFCP session modification message (including a PFCP Session Modification Request/Response), may be a PFCP session establishment message (including a PFCP Session Establishment Request/Response), may be an N4 session establishment message (including an N4 Session Establishment Request/Response), or may be an N4 session modification message (including an N4 Session Modification Request/Response).

Based on the foregoing solution, it can be effectively ensured that SMFs in an SMF network element set establish only one N19mb tunnel for a multicast/broadcast service for a UPF, to effectively save network resources.

### Scenario 2: Communication tunnel release scenario

It is assumed that in the communication tunnel release scenario, an SMF network element set includes an SMF 1 and an SMF 2.

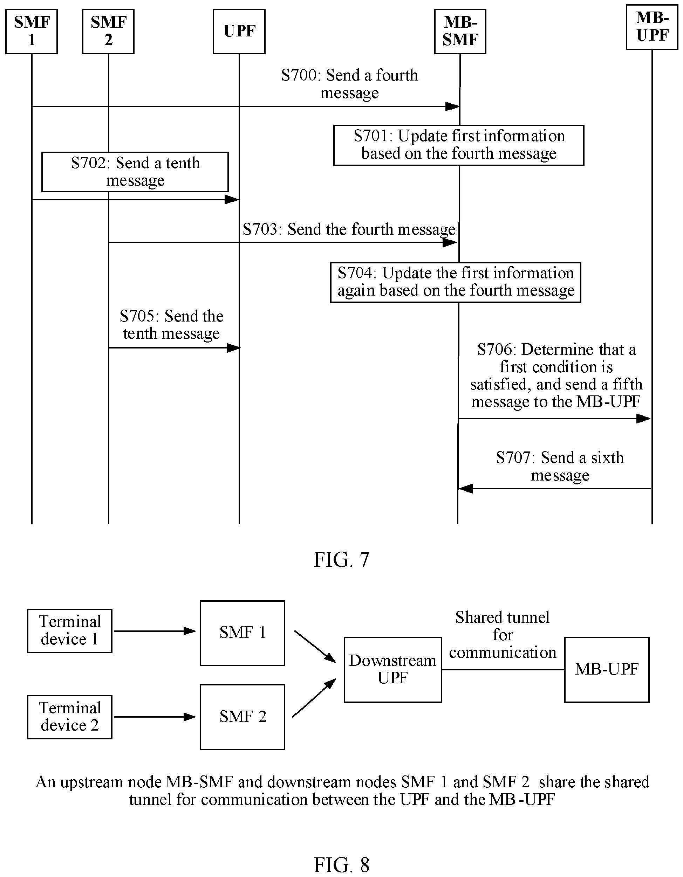

As shown in FIG. 7, based on the scenario 2, an embodiment of this application provides a communication tunnel management method. Specific steps are as follows:

S700: The SMF 1 sends a fourth message to an MB-SMF.

In this application, optionally, the fourth message requests to unsubscribe from an event related to a multicast/broadcast service, the fourth message requests to release a first tunnel, or the fourth message indicates the SMF 1 to exit receiving data of the multicast/broadcast service.

In this application, optionally, the fourth message includes one or more of the following information:
identification information of the multicast/broadcast service, a subscription correlation identifier, a correlation exit notification, and information about the first tunnel.

For example, after the SMF 1 finds that all UEs that join the multicast/broadcast service by using the SMF 1 have exited a multicast/broadcast group, the SMF 1 sends the fourth message to the MB-SMF.

S701: The MB-SMF updates first information based on the fourth message.

In this application, optionally, there are a plurality of cases in which the MB-SMF updates the first information based on the fourth message. The plurality of cases are not specifically limited to the following cases:
Case 1: When the first information includes the identification information of the multicast/broadcast service, the information about the first tunnel, an identifier of the first session management function network element, and a quantity of session management function network elements corresponding to the multicast/broadcast service and the first tunnel, the identifier of the SMF 1 is deleted from the first information, and the quantity of session management function network elements corresponding to the multicast/broadcast service and the first tunnel is updated.
Case 2: When the first information includes the identification information of the multicast/broadcast service, the information about the first tunnel, and an identifier of the first session management function network element, the identifier of the SMF 1 is deleted from the first information.
Case 3: When the first information includes the identification information of the multicast/broadcast service, the information about the first tunnel, and a quantity of session management function network elements corresponding to the multicast/broadcast service and the first tunnel, the quantity of session management function network elements corresponding to the multicast/broadcast service and the first tunnel is updated.
Case 4: When the first information includes the identification information of the multicast/broadcast service, the information about the first tunnel, an identifier of a session management function network element corresponding to the multicast/broadcast service and the first tunnel, and a quantity of session management function network elements corresponding to the multicast/broadcast service and the first tunnel, an identifier of the SMF 1 is deleted from the first information, and the quantity of session management function network elements corresponding to the multicast/broadcast service and the first tunnel is updated.
Case 5: When the first information includes the identification information of the multicast/broadcast service, the information about the first tunnel, and a multicast/broadcast service context corresponding to the multicast/broadcast service, the SMF 1 is deleted from the multicast/broadcast service context corresponding to the multicast/broadcast service.

S702: The SMF 1 sends a tenth message to a UPF.

In this application, optionally, the tenth message may be a PFCP session modification message (including a PFCP Session Modification Request/Response), may be a PFCP session establishment message (including a PFCP Session Establishment Request/Response), may be an N4 session establishment message (including an N4 Session Establishment Request/Response), may be an N4 session modification message (including an N4 Session Modification Request/Response), may be a PFCP session release request, or may be a PFCP session update request.

In this application, optionally, the tenth message may be used for releasing a resource for receiving the multicast/or broadcast service.

For example, the SMF 1 includes identification information related to the data of the multicast/broadcast service in a PFCP session establishment/update request, where the identification information may be a TMGI, a multicast/broadcast session ID, a name of the multicast/broadcast service, or the like; and/or includes a packet detection rule, a forwarding action rule, or the like that is related to the data of the multicast/broadcast service and that needs to be deleted.

It should be noted that the PFCP session release request/response in this step may alternatively be replaced with an N4 session release request/response, a multicast/broadcast PFCP session release request/response, or a multicast/broadcast PFCP session release request/response. The PFCP session modification request/response in this step may alternatively be replaced with an N4 session modification request/response, a multicast broadcast PFCP session modification request/response, a multicast/broadcast PFCP session modification request/response, or the like. This is not limited herein.

S703: The SMF 2 sends a fourth message to the MB-SMF.

For example, after the SMF 2 finds that all UEs that join the multicast/broadcast service by using the SMF 2 have exited the multicast/broadcast group, the SMF 2 sends the fourth message to the MB-SMF.

S704: The MB-SMF updates the first information again based on the fourth message.

In this application, optionally, there are a plurality of cases in which the MB-SMF updates the first information based on the fourth message. The plurality of cases are not specifically limited to the following cases:
Case 1: When the first information includes the identification information of the multicast/broadcast service, the information about the first tunnel, the identifier of the first session management function network element, and the quantity of session management function network elements corresponding to the multicast/broadcast service and the first tunnel, an identifier of the SMF 2 is deleted from the first information, and the quantity of session management function network elements corresponding to the multicast/broadcast service and the first tunnel is updated.
Case 2: When the first information includes the identification information of the multicast/broadcast service, the information about the first tunnel, and the identifier of the first session management function network element, an identifier of the SMF 2 is deleted from the first information.
Case 3: When the first information includes the identification information of the multicast/broadcast service, the information about the first tunnel, and the quantity of session management function network elements corresponding to the multicast/broadcast service and the first tunnel, the quantity of session management function network elements corresponding to the multicast/broadcast service and the first tunnel is updated.
Case 4: When the first information includes the identification information of the multicast/broadcast service, the information about the first tunnel, the identifier of the session management function network element corresponding to the multicast/broadcast service and the first tunnel, and the quantity of session management function network elements corresponding to the multicast/broadcast service and the first tunnel, an identifier of the SMF 2 is deleted from the first information, and the quantity of session management function network elements corresponding to the multicast/broadcast service and the first tunnel is updated.
Case 5: When the first information includes the identification information of the multicast/broadcast service, the information about the first tunnel, and the multicast/broadcast service context corresponding to the multicast/broadcast service, the SMF 2 is deleted from the multicast/broadcast service context corresponding to the multicast/broadcast service.

S705: The SMF 2 sends a tenth message to the UPF.

In this application, optionally, the tenth message may alternatively be a PFCP session release/update request.

For example, the SMF 2 includes the identification information related to the data of the multicast/broadcast service in a PFCP session establishment/update request, where the identification information may be the TMGI, the multicast/broadcast session ID, the name of the multicast/broadcast service, or the like; and/or includes the packet detection rule, the forwarding action rule, or the like that is related to the data of the multicast/broadcast service and that needs to be deleted.

It should be noted that the PFCP session release request/response in this step may alternatively be replaced with an N4 session release request/response, a multicast/broadcast PFCP session release request/response, or a multicast/broadcast PFCP session release request/response. The PFCP session modification request/response in this step may alternatively be replaced with an N4 session modification request/response, a multicast broadcast PFCP session modification request/response, a multicast/broadcast PFCP session modification request/response, or the like. This is not limited herein.

S706: The MB-SMF determines that a first condition is satisfied, and sends a fifth message to the MB-UPF.

In this application, optionally, the fifth message indicates to release the first tunnel.

In this application, optionally, the fifth message may include the identification information of the multicast/broadcast service.

In this application, optionally, the fifth message may be a PFCP session modification message, a PFCP session release message, a multicast/broadcast PFCP session modification message, a multicast/broadcast PFCP session release message, a multicast/broadcast service PFCP session modification message, a multicast/broadcast service PFCP session release message, or the like. In addition, the fifth message may alternatively have another name. This is not limited in this embodiment of this application.

S707: The MB-UPF sends a sixth message to the MB-SMF.

In this application, optionally, the sixth message is used for feeding back a result of releasing the first tunnel by the multicast/broadcast user plane function network element.

For example, the MB-SMF sends the fifth message to the MB-UPF to indicate to release the first tunnel when the MB-SMF finds that an association relationship group for the multicast/broadcast service has no associated SMF node in the SMF network element set, for example, there is no SMF in the 1^{st} domain of a triplet: an SMF, a TMGI, and a PFCP session context corresponding to the multicast/broadcast service; or an SMF, a TMGI, and an N19mb tunnel that is between the MB-UPF and the UPF and that is represented by shared DL Tunnel Info. The fifth message may include the identification information of the multicast/broadcast service.

Based on the foregoing method, a proper occasion can be accurately selected for releasing the N19mb tunnel shared by the SMF node for the multicast/broadcast service, to avoid multicast/broadcast service data transmission interruption of another SMF node in the SMF network element set due to an improper release occasion.

Further, in embodiments of this application, based on different cases of the SMF 1, the communication tunnel management method provided in embodiments of this application is briefly described. The cases are not specifically limited to the following cases.

Case 1: The SMF 1 and the SMF 2 are SMFs.

It is assumed that this scenario is a scenario of independent multicast/broadcast service traffic transmission in a 5G core network. Data of a multicast service is sent to a session anchor UPF (PDU Session Anchor UPF, PSA UPF) through an MB-UPF, and then the data of the multicast/broadcast service is sent to UE by using a PDU session of the UE. A transmission path is from the MB-UPF to the PSA and then to a base station.

As shown in FIG. 8, an SMF 1 and an SMF 2 belong to a same SMF network element set. The SMF 1 selects a UPF as a PSA 1, and the SMF 2 selects a UPF as a PSA 2. The UE 1 and the UE 2 use individual delivery by using the PSA 1 selected by the SMF 1. The UE 3 and the UE 4 use 5GC individual MBS traffic delivery by using the PSA 2 selected by the SMF 2. In this scenario, an upstream node is an MB-SMF, downstream nodes are the SMF set including the SMF 1 and the SMF 2, and a shared N19mb tunnel at a multicast/broadcast service granularity is established between the upstream node and the downstream nodes.

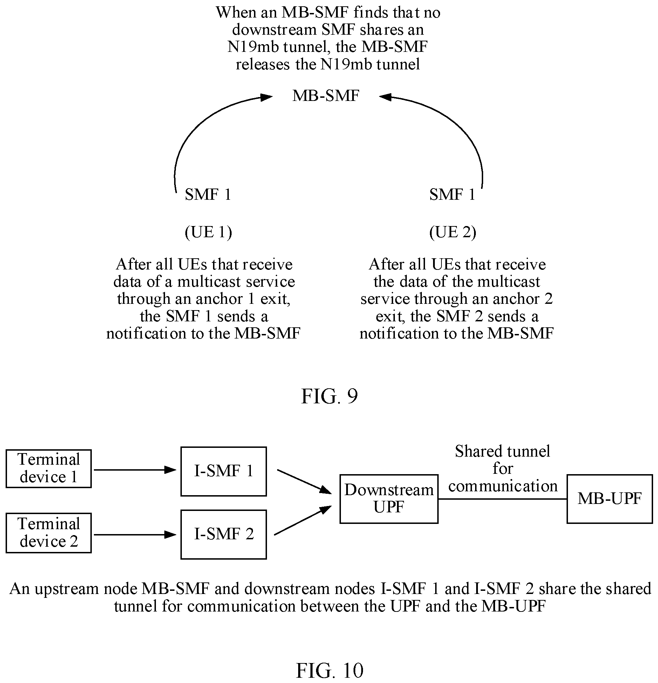

As shown in FIG. 9, when the MB-SMF finds that no downstream SMF shares the N19mb tunnel, the MB-SMF releases the N19mb tunnel.

Case 2: The SMF 1 and the SMF 2 are I-SMFs.

It is assumed that in this scenario, data of a multicast/broadcast service is injected into an intermediate UPF (Intermediate UPF, I-UPF) through an MB-UPF, and then the data of the multicast/broadcast service is sent to UE through an N3 tunnel from the I-UPF to a base station in a PDU session of the UE.

As shown in FIG. 10, an I-SMF 1 and an I-SMF 2 belong to a same SMF network element set. The I-SMF 1 selects a UPF as an I-UPF 1, and the I-SMF 2 selects a UPF as an I-UPF 2. In other words, the I-UPF 1 and the I-UPF 2 each appear on a path of a PDU session of UE 1 and UE 2. In this scenario, an upstream node is an MB-SMF, downstream nodes are the SMF set including the I-SMF 1 and the I-SMF 2, and a shared N19mb tunnel at a multicast/broadcast service granularity is established between the upstream node and the downstream nodes.

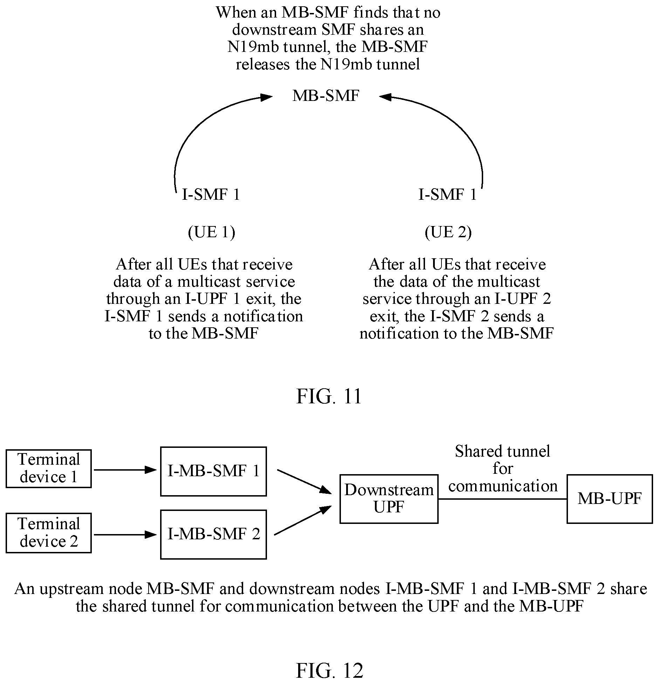

As shown in FIG. 11, when the MB-SMF finds that no downstream SMF shares the N19mb tunnel, the MB-SMF releases the N19mb tunnel.

Case 3: The SMF 1 and the SMF 2 are I-MB-SMFs.

It is assumed that this scenario is a 5G core network shared multicast/broadcast service traffic transmission scenario. To be specific, data of a multicast/broadcast service is injected into an I-MB-UPF through an MB-UPF, and then the data of the multicast/broadcast service reaches a base station through a shared N3 tunnel between the I-MB-UPF and the base station in a multicast/broadcast session. A transmission path is from the MB-UPF to the base station through the N3 tunnel, and then the base station to a plurality of UEs in a multicast/broadcast group in a point to multi-point (PTM) manner.

As shown in FIG. 12, an I-MB-SMF 1 and an I-MB-SMF 2 belong to a same SMF network element set. The I-MB-SMF 1 selects a UPF as an I-MB-UPF 1, and the I-MB-SMF 2 selects a UPF as an I-MB-UPF 2. In this scenario, an upstream node is an MB-SMF, downstream nodes are the SMF set including the I-MB-SMF 1 and the I-MB-SMF 2, and a shared N19mb tunnel at a multicast/broadcast service granularity is established between the upstream node and the downstream nodes.

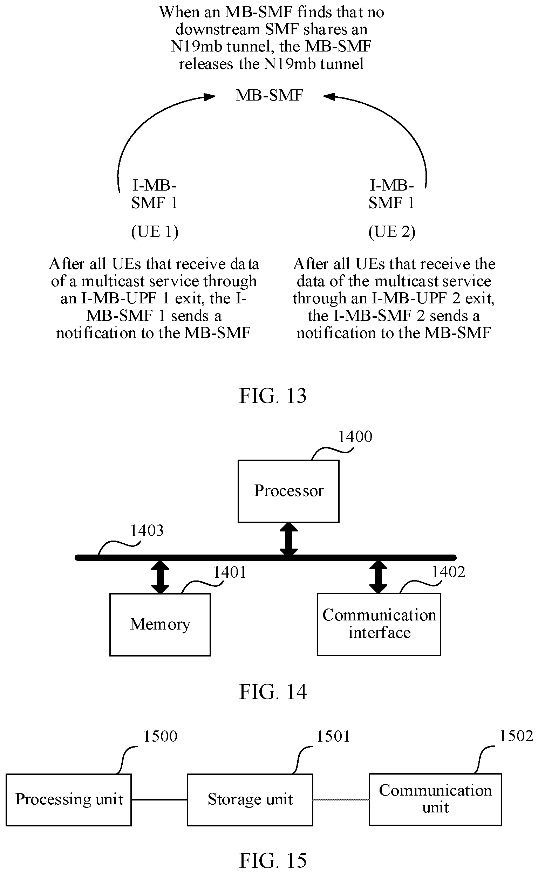

As shown in FIG. 13, when the MB-SMF finds that no downstream SMF shares the N19mb tunnel, the MB-SMF releases the N19mb tunnel.

Based on the foregoing descriptions of the solutions in this application, it may be understood that, to implement the foregoing functions, the foregoing devices include corresponding hardware structures and/or software modules for executing the functions. A person skilled in the art should easily be aware that, in combination with units and algorithm steps of the examples described in embodiments disclosed in this specification, the present invention may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

Based on the foregoing embodiments, as shown in FIG. 14, an embodiment of this application further provides a communication tunnel management apparatus. The apparatus includes a processor 1400, a memory 1401, and a communication interface 1402.

The processor 1400 is responsible for managing a bus architecture and general processing. The memory 1401 may store data used when the processor 1400 performs an operation. The communication interface 1402 is configured to receive and send data under control of the processor 1400, to perform data communication with the memory 1401.

The processor 1400 may be a central processing unit (central processing unit, CPU), a network processor (network processor, NP), or a combination of a CPU and an NP. The processor 1400 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), generic array logic (generic array logic, GAL), or any combination thereof. The memory 1401 may include various media that can store program code, such as a USB flash drive, a removable hard disk, a read-only memory (read-only memory, ROM), a random access memory (random access memory, RAM), a magnetic disk, or a compact disc.

The processor 1400, the memory 1401, and the communication interface 1402 are connected to each other. In an optional implementation of this embodiment of this application, the processor 1400, the memory 1401, and the communication interface 1402 may be connected to each other through a bus 1403. The bus 1403 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, the bus is represented by using only one thick line in FIG. 14. However, this does not mean that there is only one bus or only one type of bus.

When the communication tunnel management apparatus is a first session management function network element, the processor 1400 is configured to read a program in the memory 1401 and perform the method procedure performed by the first session management function network element in S400 to S414 shown in FIG. 4, perform the method procedure performed by the first session management function network element in S500 to S515 shown in FIG. 5, perform the method procedure performed by the first session management function network element in S600 to S607 shown in FIG. 6, or perform the method procedure performed by the first session management function network element in S700 to S707 shown in FIG. 7.

When the communication tunnel management apparatus is a second session management function network element, the processor 1400 is configured to read the program in the memory 1401 and perform the method procedure performed by the second session management function network element in S400 to S414 shown in FIG. 4, perform the method procedure performed by the second session management function network element in S500 to S515 shown in FIG. 5, perform the method procedure performed by the second session management function network element in S600 to S607 shown in FIG. 6, or perform the method procedure performed by the first session management function network element in S700 to S707 shown in FIG. 7.

When the communication tunnel management apparatus is a user plane function network element, the processor 1400 is configured to read the program in the memory 1401 and perform the method procedure performed by the user plane function network element in S400 to S414 shown in FIG. 4, perform the method procedure performed by the user plane function network element in S500 to S515 shown in FIG. 5, perform the method procedure performed by the user plane function network element in S600 to S607 shown in FIG. 6, or perform the method procedure performed by the first session management function network element in S700 to S707 shown in FIG. 7.

When the communication tunnel management apparatus is a multicast/broadcast session management function network element, the processor 1400 is configured to read the program in the memory 1401 and perform the method procedure performed by the multicast/broadcast session management function network element in S400 to S414 shown in FIG. 4, perform the method procedure performed by the multicast/broadcast session management function network element in S500 to S515 shown in FIG. 5, or perform the method procedure performed by the multicast/broadcast session management function network element in S700 to S707 shown in FIG. 7.

As shown in FIG. 15, the present invention provides a communication tunnel management apparatus. The communication tunnel management apparatus includes at least one processing unit 1500, at least one storage unit 1501, and at least one communication unit 1502. The communication unit 1502 is configured to receive and send data under control of the processing unit 1500, and the storage unit 1501 stores program code.

In an optional manner of this embodiment of this application, the communication tunnel management apparatus is a multicast/broadcast session management function network element. When the program code is executed by the processing unit 1500, the processing unit 1500 is enabled to perform the following process:
receiving a first message sent by a first session management function network element, where the first message requests to receive data of a multicast/broadcast service, and the first message carries identification information of the multicast/broadcast service; and determining, based on the first message, that a first tunnel exists, and sending a second message to the first session management function network element, where the second message indicates that the first tunnel exists, and the first tunnel is used for transmitting the data of the multicast/broadcast service between a multicast/broadcast user plane function network element controlled by the multicast/broadcast session management function network element and a user plane function network element controlled by the first session management function network element.

In a possible implementation method, the first message further includes information about the first tunnel.

In a possible implementation method, the processing unit 1500 is further configured to:
determine, based on the first message, that the first tunnel does not exist; and create first information.

In a possible implementation method, the first information includes:
a part or all of the identification information of the multicast/broadcast service, the information about the first tunnel, an identifier of the first session management function network element, an identifier of a session management function network element corresponding to the multicast/broadcast service and the first tunnel, a multicast/broadcast service context corresponding to the multicast/broadcast service, and a quantity of session management function network elements corresponding to the multicast/broadcast service and the first tunnel.

In a possible implementation method, the processing unit 1500 is further configured to:
receive a ninth message sent by a second session management function network element, where the ninth message carries the identification information of the multicast/broadcast service; determine, based on the ninth message, that the first tunnel exists; and update the first information.

In a possible implementation method, the processing unit 1500 is specifically configured to:
when the first information includes the identification information of the multicast/broadcast service, the information about the first tunnel, the identifier of the first session management function network element, and the quantity of session management function network elements corresponding to the multicast/broadcast service and the first tunnel, add an identifier of the second session management function network element to the first information, and update the quantity of session management function network elements corresponding to the multicast/broadcast service and the first tunnel.

In a possible implementation method, the processing unit 1500 is specifically configured to:
when the first information includes the identification information of the multicast/broadcast service, the information about the first tunnel, and the identifier of the first session management function network element, add an identifier of the second session management function network element to the first information.

In a possible implementation method, the processing unit 1500 is specifically configured to:
when the first information includes the identification information of the multicast/broadcast service, the information about the first tunnel, and the quantity of session management function network elements corresponding to the multicast/broadcast service and the first tunnel, update the quantity of session management function network elements corresponding to the multicast/broadcast service and the first tunnel.

In a possible implementation method, the processing unit 1500 is specifically configured to:
when the first information includes the identification information of the multicast/broadcast service, the information about the first tunnel, the identifier of the session management function network element corresponding to the multicast/broadcast service and the first tunnel, and the quantity of session management function network elements corresponding to the multicast/broadcast service and the first tunnel, add an identifier of the second session management function network element to the first information, and update the quantity of session management function network elements corresponding to the multicast/broadcast service and the first tunnel.

In a possible implementation method, the processing unit 1500 is specifically configured to:
when the first information includes the identification information of the multicast/broadcast service, the information about the first tunnel, and the multicast/broadcast service context corresponding to the multicast/broadcast service, add an identifier of the second session management function network element to the multicast/broadcast service context corresponding to the multicast/broadcast service.

In a possible implementation method, the processing unit 1500 is further configured to:
send a third message to the second session management function network element, where the third message indicates existence of the first tunnel.

In a possible implementation method, the third message includes one or more of the identification information of the multicast/broadcast service, the information about the first tunnel, and an indication indicating that the first tunnel exists.

In a possible implementation method, the processing unit 1500 is further configured to:
receive a fourth message from the first session management function network element and/or the second session management function network element, where the fourth message requests to unsubscribe from an event related to the multicast/broadcast service; the fourth message requests to release the first tunnel; or the fourth message indicates the first session management function network element and/or the second session management function network element to exit receiving the data of the multicast/broadcast service.

In a possible implementation method, the fourth message includes one or both of the following information:
the identification information of the multicast/broadcast service, and a subscription correlation identifier.

In a possible implementation method, the processing unit 1500 is further configured to:
update the first information based on the fourth message.

In a possible implementation method, the processing unit 1500 is specifically configured to:
when the first information includes the identification information of the multicast/broadcast service, the information about the first tunnel, the identifier of the first session management function network element, and the quantity of session management function network elements corresponding to the multicast/broadcast service and the first tunnel, delete the identifier of the first session management function network element and/or the identifier of the second session management function network element from the first information, and update the quantity of session management function network elements corresponding to the multicast/broadcast service and the first tunnel.

In a possible implementation method, the processing unit 1500 is specifically configured to:
when the first information includes the identification information of the multicast/broadcast service, the information about the first tunnel, and the identifier of the first session management function network element, delete the identifier of the first session management function network element and/or the identifier of the second session management function network element from the first information.

In a possible implementation method, the processing unit 1500 is specifically configured to:
when the first information includes the identification information of the multicast/broadcast service, the information about the first tunnel, and the quantity of session management function network elements corresponding to the multicast/broadcast service and the first tunnel, update the quantity of session management function network elements corresponding to the multicast/broadcast service and the first tunnel.

In a possible implementation method, the processing unit 1500 is specifically configured to:
when the first information includes the identification information of the multicast/broadcast service, the information about the first tunnel, the identifier of the session management function network element corresponding to the multicast/broadcast service and the first tunnel, and the quantity of session management function network elements corresponding to the multicast/broadcast service and the first tunnel, delete the identifier of the first session management function network element and/or the identifier of the second session management function network element from the first information, and update the quantity of session management function network elements corresponding to the multicast/broadcast service and the first tunnel.

In a possible implementation method, the processing unit 1500 is specifically configured to:
when the first information includes the identification information of the multicast/broadcast service, the information about the first tunnel, and the multicast/broadcast service context corresponding to the multicast/broadcast service, delete the identifier of the first session management function network element and/or the identifier of the second session management function network element from the multicast/broadcast service context corresponding to the multicast/broadcast service.

In a possible implementation method, the processing unit 1500 is further configured to:
determine that a first condition is satisfied, and send a fifth message to the multicast/broadcast user plane function network element, where the fifth message indicates to release the first tunnel.

In a possible implementation method, the first condition includes:
when the first information includes the identification information of the multicast/broadcast service, the information about the first tunnel, the identifier of the first session management function network element, and the quantity of session management function network elements corresponding to the multicast/broadcast service and the first tunnel, it is determined that the first information does not include an identifier of any session management function network element and the quantity of session management function network elements corresponding to the multicast/broadcast service and the first tunnel is 0;
when the first information includes the identification information of the multicast/broadcast service, the information about the first tunnel, and the identifier of the first session management function network element, it is determined that the first information does not include an identifier of any session management function network element;
when the first information includes the identification information of the multicast/broadcast service, the information about the first tunnel, and the quantity of session management function network elements corresponding to the multicast/broadcast service and the first tunnel, it is determined that the quantity of session management function network elements corresponding to the multicast/broadcast service and the first tunnel is 0; or
when the first information includes the identification information of the multicast/broadcast service, the information about the first tunnel, the identifier of the session management function network element corresponding to the multicast/broadcast service and the first tunnel, and the quantity of session management function network elements corresponding to the multicast/broadcast service and the first tunnel, it is determined that the first information does not include an identifier of any session management function network element, and the quantity of session management function network elements corresponding to the multicast/broadcast service and the first tunnel is 0.

In a possible implementation method, the processing unit 1500 is further configured to:
receive a sixth message from the multicast/broadcast user plane function network element, where the sixth message is used for feeding back a result of releasing the first tunnel by the multicast/broadcast user plane function network element.

In a possible implementation method, the second message further includes the information about the first tunnel.

In an optional manner of this embodiment of this application, the communication tunnel management apparatus is a first session management function network element. When the program code is executed by the processing unit 1500, the processing unit 1500 is enabled to perform the following process:
sending a first message to a multicast/broadcast session management function network element, where the first message requests to receive data of a multicast/broadcast service, and the first message carries identification information of the multicast/broadcast service; and receiving a second message sent by the multicast/broadcast session management function network element, where the second message is a feedback message for the first message.

In a possible implementation method, the processing unit 1500 is further configured to:
send a tenth message to a user plane function network element, where the tenth message requests the user plane function network element to allocate information about a first tunnel.

In an optional manner of this embodiment of this application, the communication tunnel management apparatus is a second session management function network element. When the program code is executed by the processing unit 1500, the processing unit 1500 is enabled to perform the following process:
sending a ninth message to a multicast/broadcast session management function network element, where the ninth message requests to receive data of a multicast/broadcast service, and the ninth message carries identification information of the multicast/broadcast service; and receiving a third message sent by the multicast/broadcast session management function network element, where the third message indicates that a first tunnel exists, and the first tunnel is used for transmitting the data of the multicast/broadcast service between a multicast/broadcast user plane function network element controlled by the multicast/broadcast session management function network element and a user plane function network element controlled by the session management function network element.

In a possible implementation method, the third message includes one or more of the identification information of the multicast/broadcast service, information about the first tunnel, and an indication indicating that the first tunnel exists.

In a possible implementation method, the processing unit 1500 is further configured to:
send a seventh message to the user plane function network element, where the seventh message includes an identifier of a session management function network element set to which the session management function network element belongs, and the seventh message notifies the user plane function network element of the information about the first tunnel.

In a possible implementation method, the first message further includes the information about the first tunnel.

In a possible implementation method, the processing unit 1500 is further configured to:
determine that an eighth message sent by the user plane function network element is not received, where the eighth message includes the information about the first tunnel.

In a possible implementation method, the processing unit 1500 is further configured to:
send a fourth message to the multicast/broadcast session management function network element, where the fourth message requests to unsubscribe from an event related to the multicast/broadcast service, the fourth message requests to release the first tunnel, or the fourth message indicates the first session management function network element to exit receiving the data of the multicast/broadcast service.

In a possible implementation method, the fourth message includes the identification information of the multicast/broadcast service and/or a subscription correlation identifier.

In an optional manner of this embodiment of this application, the communication tunnel management apparatus is a user plane function network element. When the program code is executed by the processing unit 1500, the processing unit 1500 is enabled to perform the following process:
receiving a seventh message sent by a first session management function network element, where the seventh message includes an identifier of a session management function network element set to which the session management function network element belongs, the seventh message notifies the user plane function network element of information about a first tunnel; and sending an eighth message to a remaining session management function network element in the session management function network element set based on the seventh message, where the eighth message notifies that the first tunnel exists.

In a possible implementation method, the seventh message may be a PFCP session modification message, a PFCP session establishment message, an N4 session modification message, or an N4 session establishment message.

In a possible implementation method, the seventh message further includes one or more of a packet detection rule PDR, a forwarding action rule FAR, and a packet forwarding control protocol PFCP session context.

In an optional manner of this embodiment of this application, the communication tunnel management apparatus is a user plane function network element. When the program code is executed by the processing unit 1500, the processing unit 1500 is enabled to perform the following process:
receiving a tenth message sent by a session management function network element, where the tenth message requests allocation of a first tunnel; and sending an eleventh message to the session management function network element if determining that the session management function network element is the 1^{st} session management function network element that sends the tenth message in a session management function network element set to which the session management function network element belongs, where the eleventh message includes information about the first tunnel; or sending a twelfth message to the session management function network element if determining that the session management function network element is not the 1^{st} session management function network element that sends the tenth message in a session management function network element set to which the session management function network element belongs, where the twelfth message indicates that information about the first tunnel has been allocated.

In a possible implementation method, the twelfth message further includes the information about the first tunnel.

Functions of the communication unit 1502 and the processing unit 1500 shown in FIG. 15 may be executed by the processor 1400 by running a program in the memory 1401, or may be independently executed by the processor 1400.

In some possible implementations, aspects of the communication tunnel management method provided in embodiments of the present invention may be further implemented in a form of a program product. The program product includes program code. When the program code is executed on a computer device, the program code is used for enabling the computer device to perform the steps in the communication tunnel management method according to various example implementations of the present invention described in this specification.

The program product may use any combination of one or more readable media. The readable medium may be a readable signal medium or a readable storage medium. For example, the readable storage medium may be, but is not limited to, an electrical, a magnetic, an optical, an electromagnetic, an infrared, or a semiconductor system, apparatus or device, or any combination thereof. More specific examples (non-exhaustive list) of the readable storage medium include: an electrical connection having one or more conducting wires, a portable disk, a hard disk, a random access memory (RAM), a read-only memory (ROM), an erasable programmable read-only memory (EPROM or flash memory), an optical fiber, a portable compact disc read-only memory (CD-ROM), an optical storage component, a magnetic storage component, or any appropriate combination thereof.

A program product for performing communication tunnel management in an implementation of the present invention may use a portable compact disc read-only memory (CD-ROM) and include program code, and may run on a server device. However, the program product of the present invention is not limited thereto. In this specification, the readable storage medium may be any tangible medium that includes or stores a program, and the program can be used by a communication tunnel management apparatus or a component, or used in combination with the communication tunnel management apparatus or the component.

The readable signal medium may include a data signal propagated in a baseband or as a part of a cell, where the data signal carries readable program code. The propagated data signal may be in a plurality of forms, including but not limited to an electromagnetic signal, an optical signal, or any appropriate combination thereof. The readable signal medium may alternatively be any readable medium other than the readable storage medium. The readable medium may send, propagate, or transmit a program used by or in combination with a periodic network action system, apparatus, or device.

The program code included in the readable medium may be transmitted by using any appropriate medium, including but not limited to a wireless medium, a wired medium, an optical cable, an RF medium, or any appropriate combination thereof.

The program code for executing the operations of the present invention may be written in any combination of one or more program design languages. The program design languages include object-oriented program design languages such as Java and C++, and further include a conventional procedural program design language such as a "C" language or a similar program design language. The program code may be completely executed on a computing device of a user, partially executed on user equipment, executed as an independent software package, partially executed on a computing device of a user and partially executed on a remote computing device, or completely executed on a remote computing device or server. When the program code is executed on the remote computing device, the remote computing device may be connected to the user's computing device by using any type of network, including a local area network (LAN) or a wide area network (WAN), or may be connected to an external computing device.

An embodiment of this application further provides a computing device-readable storage medium for a communication tunnel management method, that is, content is not lost after a power failure. The storage medium stores a software program including program code. When the program code is executed on a computing device, any solution for communication tunnel management in the foregoing embodiments of this application can be implemented when the software program is read and executed by one or more processors.

The foregoing describes this application with reference to the block diagrams and/or flowcharts of the method, the apparatus (system), and/or the computer program product in the embodiments of this application. It should be understood that a block of the block diagrams and/or flowcharts and a combination of blocks in the block diagrams and/or flowcharts, can be implemented by using computer program instructions. These computer program instructions may be provided to a processor of a general-purpose computer, a processor of a dedicated computer, or another programmable data processing apparatus to produce a machine, so that the instructions executed by the processor of the computer and/or the another programmable data processing apparatus create a method for implementing a specific function/action in the block in the flowcharts and/or block diagrams.

Correspondingly, this application may further be implemented by using hardware and/or software (including firmware, resident software, microcode, and the like). Still further, this application may be in a form of a computer program product on a computer-usable or computer-readable storage medium. The computer program product has computer-usable or computer-readable program code implemented in the medium, so that the computer-usable or computer-readable is used by an instruction execution system or used in combination with an instruction execution system. In the context of this application, the computer-usable or computer-readable medium may be any medium, and may include, store, communicate, transmit, or transfer a program, for use by an instruction execution system, apparatus, or device or used in combination with an instruction execution system, apparatus, or device.

Although this application is described with reference to specific features and embodiments thereof, it is clear that various modifications and combinations may be made to them without departing from the spirit and scope of this application. Correspondingly, the specification and accompanying drawings are merely example description of this application defined by the accompanying claims, and are considered as any of or all modifications, variations, combinations or equivalents that cover the scope of this application. It is clearly that, a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication tunnel management method, comprising:
sending, by a session management function network element, a first message to a multicast/broadcast session management function network element, wherein the first message requests to receive data of a multicast/broadcast service, and the first message carries identification information of the multicast/broadcast service; and
receiving, by the session management function network element, a second message sent by the multicast/broadcast session management function network element, wherein the second message is a feedback message for the first message.

2. The method according to claim 1, wherein before the sending, by a session management function network element, a first message to a multicast/broadcast session management function network element, the method further comprises:
sending, by the session management function network element, a tenth message to a user plane function network element, wherein the tenth message requests the user plane function network element to allocate information about a first tunnel, and the first tunnel is used for transmitting the data of the multicast/broadcast service between a multicast/broadcast user plane function network element controlled by the multicast/broadcast session management function network element and the user plane function network element.

3. A communication tunnel management method, comprising:
receiving, by a user plane function network element, a tenth message sent by a session management function network element, wherein the tenth message requests allocation of information about a first tunnel, and the first tunnel is used for transmitting data of a multicast/broadcast service between a multicast/broadcast user plane function network element controlled by a multicast/broadcast session management function network element and the user plane function network element; and
if the user plane function network element determines that the session management function network element is the 1^{st} session management function network element that sends the tenth message in a plurality of session management function network elements, sending, by the user plane function network element, an eleventh message to the session management function network element, wherein the eleventh message comprises the information about the first tunnel; or
if the user plane function network element determines that the session management function network element is not the 1^{st} session management function network element that sends the tenth message in a plurality of session management function network elements, sending, by the user plane function network element, a twelfth message to the session management function network element, wherein the twelfth message comprises an indication indicating that the information about the first tunnel has been allocated.

4. The method according to claim 3, wherein that the user plane function network element determines that the session management function network element is the 1^{st} session management function network element that sends the tenth message in a plurality of session management function network elements comprises:
determining, by the user plane function network element, that the tenth message is the 1^{st} tenth message received by the user plane function network element.

5. The method according to claim 3 or 4, wherein that the user plane function network element determines that the session management function network element is not the 1^{st} session management function network element that sends the tenth message in a plurality of session management function network elements comprises:
determining, by the user plane function network element, that the tenth message is not the 1^{st} tenth message received by the user plane function network element.

6. The method according to any one of claims 3 to 5, wherein the twelfth message further comprises the information about the first tunnel.

7. The method according to any one of claims 3 to 6, wherein the information about the first tunnel is information about an N19mb tunnel.

8. The method according to any one of claims 3 to 7, wherein the first tunnel is a tunnel shared by a plurality of session management function network elements.

9. The method according to any one of claims 3 to 8, wherein the tenth message further comprises identification information of the multicast/broadcast service.

10. The method according to any one of claims 3 to 9, wherein the eleventh message is a forwarding control protocol session modification response, a forwarding control protocol session establishment response, an N4 session modification response, or an N4 session establishment response.

11. The method according to any one of claims 3 to 10, wherein the tenth message is a forwarding control protocol session modification request, a forwarding control protocol session establishment request, an N4 session modification request, or an N4 session establishment request.

12. The method according to any one of claims 3 to 11, wherein the twelfth message is a forwarding control protocol session modification response, a forwarding control protocol session establishment response, an N4 session modification response, or an N4 session establishment response.

13. The method according to any one of claims 3 to 12, wherein before the sending, by the user plane function network element, an eleventh message to the session management function network element, the method further comprises:
allocating, by the user plane function network element, the information about the first tunnel.

14. The method according to any one of claims 3 to 13, wherein the plurality of session management function network elements comprise a session management function network element set or a session management function network element list.

15. A communication tunnel management apparatus, comprising a communication module and a processing module, wherein the communication module is configured to support the communication tunnel management apparatus in performing communication, and the processing module is configured to perform the method according to claim 1 or 2, or perform the method according to any one of claims 3 to 14.

16. A communication tunnel management apparatus, comprising one or more processors, a memory, and a transceiver, wherein
the processor is configured to read a program in the memory and perform the method according to claim 1 or 2, or perform the method according to any one of claims 3 to 14.

17. A communication tunnel management system, comprising a session management function network element and a user plane function network element, wherein
the session management function network element is configured to send a tenth message to the user plane function network element, wherein the tenth message requests the user plane function network element to allocate information about a first tunnel, and the first tunnel is used for transmitting data of a multicast/broadcast service between a multicast/broadcast user plane function network element controlled by a multicast/broadcast session management function network element and the user plane function network element;
the user plane function network element is configured to receive the tenth message sent by the session management function network element; and
the user plane function network element is further configured to: send an eleventh message to the session management function network element when determining that the session management function network element is the 1^{st} session management function network element that sends the tenth message in a plurality of session management function network elements, wherein the eleventh message comprises the information about the first tunnel; or send a twelfth message to the session management function network element when determining that the session management function network element is not the 1^{st} session management function network element that sends the tenth message in a plurality of session management function network elements, wherein the twelfth message comprises an indication indicating that the information about the first tunnel has been allocated.

18. The system according to claim 17, wherein the user plane function network element is specifically configured to:
determine that the tenth message is the 1^{st} tenth message received by the user plane function network element.

19. The system according to claim 17 or 18, wherein the user plane function network element is specifically configured to:
determine that the tenth message is not the 1^{st} tenth message received by the user plane function network element.

20. The system according to any one of claims 17 to 19, wherein the twelfth message further comprises the information about the first tunnel.

21. The system according to any one of claims 17 to 20, wherein the information about the first tunnel is information about an N19mb tunnel.

22. The system according to any one of claims 17 to 21, wherein the first tunnel is a tunnel shared by a plurality of session management function network elements.

23. The system according to any one of claims 17 to 22, wherein the tenth message further comprises identification information of the multicast/broadcast service.

24. A computer-readable storage medium, comprising computer instructions, wherein when the computer instructions are run on a communication tunnel management apparatus, the communication tunnel management apparatus is enabled to perform the method according to claim 1 or 2, or perform the method according to any one of claims 3 to 14.
